(19) Europäisches Patentamt / European Patent Office / Office européen des brevets

(11) **EP 3 157 714 B1**

(12) **FASCICULE DE BREVET EUROPEEN**

(45) Date de publication et mention de la délivrance du brevet:
**15.02.2023 Bulletin 2023/07**

(21) Numéro de dépôt: **15730981.6**

(22) Date de dépôt: **03.06.2015**

(51) Classification Internationale des Brevets (IPC):
**B25J 3/04** *(1968.09)* **B25J 13/02** *(1968.09)*

(52) Classification Coopérative des Brevets (CPC):
**B25J 13/02; B25J 3/04;** G05B 2219/36429

(86) Numéro de dépôt international:
**PCT/EP2015/062407**

(87) Numéro de publication internationale:
**WO 2015/197333 (30.12.2015 Gazette 2015/52)**

(54) **ROBOT DE CO-MANIPULATION COMPORTANT DES MOYENS DE COMMANDE DU ROBOT**

CO-HANDHABUNG EINES ROBOTERS MIT ROBOTERSTEUERUNGSVORRICHTUNG

CO-HANDLING ROBOT COMPRISING ROBOT CONTROL MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2014 FR 1455811**

(43) Date de publication de la demande:
**26.04.2017 Bulletin 2017/17**

(73) Titulaire: **Commissariat à l'Énergie Atomique et aux Énergies Alternatives
75015 Paris (FR)**

(72) Inventeurs:
• **GOSSELIN, Florian**
  **92170 Vanves (FR)**
• **LAMY, Xavier**
  **92190 Meudon (FR)**
• **PONSORT, Dominique**
  **91570 Bievres (FR)**

(74) Mandataire: **Decorchemont, Audrey Véronique Christèle et al
CABINET BOETTCHER
16, rue Médéric
75017 Paris (FR)**

(56) Documents cités:
WO-A2-2012/149402    JP-A- H 042 478
JP-A- 2005 334 999    US-A1- 2012 237 319

**Description**

L'invention concerne un robot de co-manipulation comportant des moyens de commande du robot.

ARRIERE PLAN TECHNOLOGIQUE DE L'INVENTION

Dans le domaine de la robotique, il existe différents systèmes qui permettent d'assister les opérateurs dans leurs tâches.

Pour manipuler des objets à distance et réaliser des tâches pénibles, on trouve tout d'abord des systèmes dits de télé-opération. Ces systèmes sont généralement constitués d'un bras maître et d'un bras esclave couplés entre eux.

Cependant, ce sont des systèmes complexes, tant dans leur conception que dans leur utilisation. En conséquence ils s'avèrent coûteux et difficiles à prendre en main. En général la productivité obtenue avec ces systèmes est inférieure à celle obtenue en intervenant directement sur une pièce, à mains nues ou via des outils, pour réaliser la tâche.

Pour assister l'opérateur dans la réalisation d'une tâche complexe et/ou pénible tout en conservant un système plus simple que les systèmes de télé-opération, il a été mis au point des systèmes dits de co-manipulation. Ces systèmes sont généralement composés d'un robot de co-manipulation qui effectue la tâche à accomplir via un outil et qui comprend un organe de pilotage permettant à l'opérateur de commander les mouvements dudit robot de co-manipulation via ledit organe de pilotage. Un tel robot de co-manipulation permet ainsi la manipulation conjointe de l'outil avec l'opérateur et permet donc d'assister l'opérateur dans l'exécution de la tâche à accomplir. La demande US 2012/237319 divulgue un tel système.

Toutefois, les mouvements effectués par l'opérateur sont alors en général reproduits à l'identique par l'outil. Ainsi, ce type de robots s'avère ne pouvoir assister de façon efficace l'opérateur que dans l'exécution de tâches simples.

OBJET DE L'INVENTION

Un but de l'invention est de proposer un robot de co-manipulation permettant d'obvier au moins en partie aux inconvénients précités.

BREVE DESCRIPTION DE L'INVENTION

En vue de la réalisation de ce but, on propose un robot de co-manipulation comportant :

- une première chaîne d'éléments qui comporte un élément d'extrémité proximale formant une base du robot et un élément d'extrémité distale, les différents éléments étant montés mobiles les uns par rapport aux autres de sorte que l'élément d'extrémité distale soit déplaçable relativement à l'élément d'extrémité proximale,
- au moins un organe de pilotage du robot, ledit organe étant lié à l'un des éléments de la première chaîne d'éléments, autre que l'élément d'extrémité distale, et étant agencé pour pouvoir être déplacé directement par un opérateur relativement à l'élément d'extrémité proximale,
- des moyens de commande d'au moins une partie de la première chaîne d'éléments et de l'organe de pilotage,

la première chaîne d'éléments, l'organe de pilotage et les moyens de commande étant configurés de sorte qu'à au moins un mouvement de l'organe de pilotage relativement à l'élément d'extrémité proximale selon au moins un degré de liberté de l'organe de pilotage soit associé un mouvement plus complexe de l'élément d'extrémité distale relativement à l'élément d'extrémité proximale selon au moins l'un des degrés de liberté de l'élément d'extrémité distale.

Ainsi, les moyens de commande permettent de coupler au moins une partie des degrés de liberté de l'organe de pilotage avec au moins une partie des degrés de liberté de l'élément d'extrémité distale, ce qui leur permet d'imposer à l'élément d'extrémité distale d'effectuer un mouvement plus complexe que le mouvement imposé à l'organe de pilotage par l'opérateur. C'est néanmoins toujours l'opérateur qui contrôle les déplacements de la première chaîne d'éléments et ainsi de l'élément d'extrémité distale en interagissant physiquement sur l'organe de pilotage lié à ladite première chaîne d'éléments. Grâce au couplage entre l'élément d'extrémité distale et l'organe de pilotage, l'opérateur peut ressentir physiquement les interactions entre le robot et son environnement. En outre, son geste peut éventuellement être assisté ou guidé par le robot, ce qui facilite la réalisation de la tâche à effectuer. En particulier, le fait que certains mouvements de l'extrémité distale soient couplés à un mouvement de l'organe de pilotage rend l'utilisation du robot intuitive pour l'opérateur.

L'invention s'avère donc particulièrement utile pour réaliser des tâches nécessitant des mouvements complexes de l'élément d'extrémité distale relativement à un objet ou à l'environnement du robot, ces tâches étant commandées par des mouvements plus simples de l'organe de pilotage. Elle permet une meilleure ergonomie de co-manipulation et peut être utilisée pour exécuter des tâches complexes plus rapidement et plus efficacement que des robots de co-manipulation de l'art antérieur.

L'invention s'avère aussi particulièrement utile pour réaliser une tâche pénible ou dangereuse au niveau de l'élément d'extrémité distale. En effet, le fait que l'organe de pilotage ne soit pas lié à l'élément d'extrémité distale permet d'éloigner l'opérateur de l'élément d'extrémité distale et donc de la zone de travail dangereuse.

Les caractéristiques essentielles de l'invention sont donc :

- la présence de deux ports d'interaction sur le robot de co-manipulation, l'un avec l'opérateur via l'organe de pilotage et l'autre avec l'environnement via l'élément d'extrémité distale;
- le fait que l'organe de pilotage ne soit pas intégré à l'élément d'extrémité distale, ce qui permet d'éloigner l'opérateur de la zone de travail et de lui faire faire des mouvements différents de ceux de l'élément d'extrémité distale et de moindre amplitude ;
- la présence des moyens de commande qui permet d'intégrer des couplages entre l'organe de pilotage et l'élément d'extrémité distale,
- le fait qu'au moins un des mouvements de l'organe de pilotage soit associé à un mouvement plus complexe de l'élément d'extrémité distale.

Selon un mode de réalisation particulier, la première chaîne d'éléments, l'organe de pilotage et les moyens de commande sont configurés pour imposer au moins un mouvement de l'organe de pilotage relativement à l'élément d'extrémité proximale et/ou pour imposer des efforts appliqués à l'organe de pilotage.

De la sorte, il est possible de provoquer un déplacement de l'organe de pilotage et/ou d'appliquer un effort sur ledit organe de pilotage pour s'opposer aux mouvements imposés par l'opérateur à l'organe de pilotage, pour guider les mouvements imposés par l'opérateur à l'organe de pilotage ou pour assister les mouvements imposés par l'opérateur à l'organe de pilotage ou pour assurer un retour d'efforts à l'opérateur. Les gestes sont ainsi assistés ou guidés par le robot ce qui facilite la réalisation de la tâche à effectuer.

Selon un mode de réalisation particulier, la première chaîne d'éléments, l'organe de pilotage et les moyens de commande sont configurés de sorte que des efforts appliqués à l'élément d'extrémité distale soit couplés à un mouvement de l'organe de pilotage relativement à l'élément d'extrémité proximale et/ou à des efforts appliqués à l'organe de pilotage par l'opérateur.

Ainsi, l'opérateur peut contrôler les efforts appliqués à l'élément d'extrémité distale et par là les efforts appliqués par le robot à son environnement. L'opérateur peut donc encore davantage ressentir physiquement les interactions entre le robot et son environnement. L'utilisation du robot est particulièrement intuitive pour l'opérateur.

De façon particulière, la première chaîne d'éléments, l'organe de pilotage et les moyens de commande sont configurés de sorte que chaque mouvement de l'élément d'extrémité distale relativement à l'élément d'extrémité proximale soit couplé à un mouvement de l'organe de pilotage relativement à l'élément d'extrémité proximale et/ou à des efforts appliqués à l'organe de pilotage par l'opérateur, au moins un des mouvements de l'élément d'extrémité distale relativement à l'élément d'extrémité proximale étant couplé à un mouvement de l'organe de pilotage relativement à l'élément d'extrémité proximale.

Le fait que tous les mouvements de l'extrémité distale soient couplés à un mouvement de l'organe de pilotage ou à des efforts appliqués à l'organe de pilotage rend l'utilisation du robot particulièrement intuitive pour l'opérateur.

Pour toute la présente demande, par « couplage », on entend une fonction mathématique reliant les mouvements de l'élément d'extrémité distale et/ou les efforts appliqués audit élément avec les mouvements de l'organe de pilotage et/ou les efforts appliqués à l'organe de pilotage.

Pour toute la présente demande, par « mouvement plus complexe » de l'élément d'extrémité distale on entend que pour un mouvement donné de l'organe de pilotage relativement à la base, le mouvement correspondant de l'élément d'extrémité distale relativement à la base comprend un plus grand nombre de degrés de liberté. Le mouvement plus complexe est ainsi corrélé au mouvement associé de l'organe de pilotage tout en pouvant respecter une ou plusieurs contraintes supplémentaires. Par exemple, l'extrémité distale suit un mouvement imposé par l'organe de pilotage tout en respectant la contrainte « demeurer perpendiculaire à l'objet sur lequel le robot interagit ».

Ainsi, un mouvement plus ample de l'élément d'extrémité distale relativement à la base ne correspond pas à la définition d'un « mouvement plus complexe » de l'invention (bien que dans l'invention pour un mouvement donné de l'organe de pilotage relativement à la base, le mouvement correspondant de l'élément d'extrémité distale relativement à la base puisse être à la fois plus complexe et plus ample).

BREVE DESCRIPTION DES DESSINS

L'invention sera mieux comprise à la lumière de la description qui suit de modes de réalisation particuliers, non limitatifs de l'invention.

Il sera fait référence aux figures ci-jointes, parmi lesquelles :

- la figure 1 est une vue schématique en trois dimensions d'un robot de co-manipulation selon un premier mode de réalisation de l'invention,
- la figure 2 illustre une première variante du robot de co-manipulation illustré à la figure 1 ;
- la figure 3 illustre une deuxième variante du robot de co-manipulation illustré à la figure 1 ;
- la figure 4 illustre une troisième variante du robot de co-manipulation illustré à la figure 1 ;
- la figure 5 illustre une quatrième variante du robot de co-manipulation illustré à la figure 1 ;
- la figure 6 illustre une vue schématique en trois dimensions d'un robot de co-manipulation selon un deuxième mode de réalisation de l'invention,
- la figure 7 illustre une première variante du robot de co-manipulation illustré à la figure 6 ;
- la figure 8 illustre une deuxième variante du robot de co-manipulation illustré à la figure 6;
- la figure 9 illustre une troisième variante du robot de co-manipulation illustré à la figure 6 ;
- la figure 10 illustre une quatrième variante du robot de co-manipulation illustré à la figure 6 ;
- la figure 11 illustre une cinquième variante du robot de co-manipulation illustré à la figure 6 ;
- la figure 12 illustre une vue schématique en trois dimensions d'un robot de co-manipulation selon un troisième mode de réalisation de l'invention,
- la figure 13 illustre une vue schématique en trois dimensions d'un robot de co-manipulation selon un quatrième mode de réalisation de l'invention,
- la figure 14 est un zoom d'une portion du robot illustré à la figure 13,
- la figure 15 est un zoom d'une portion du robot illustré à la figure 13,
- la figure 16 est un schéma représentant différentes étapes d'une tâche de pliage effectuée par le robot illustré à la figure 13,
- la figure 17 illustre une variante de l'outil du robot représenté à la figure 13,
- la figure 18 illustre un programme de commande exécuté par le contrôleur du robot représenté à la figure 13,
- la figure 19 illustre un autre programme de commande exécuté par le contrôleur du robot représenté à la figure 13.

DESCRIPTION DETAILLEE DE L'INVENTION

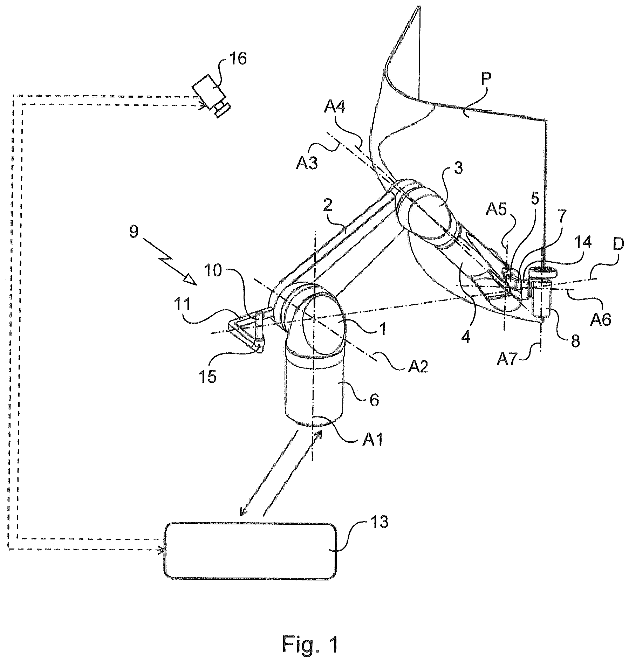

La figure 1 illustre un robot de co-manipulation selon un premier mode de réalisation de l'invention.

Le robot de co-manipulation comporte une chaîne principale d'éléments articulés entre eux qui comporte un élément d'extrémité proximale 6 formant une base du robot et un élément d'extrémité distale 7. Ladite chaîne principale d'éléments est ici une chaîne à six degrés de liberté qui est constituée de :

- la base 6,
- un premier élément 1 monté pivotant sur la base 6 autour d'un premier axe A1,
- un deuxième élément 2 monté pivotant sur le premier élément 1 autour d'un deuxième axe A2,
- un troisième élément 3 monté pivotant sur le deuxième élément 2 autour d'un troisième axe A3,
- un quatrième élément 4 monté pivotant sur le troisième élément 3 autour d'un quatrième axe A4,
- un cinquième élément 5 monté pivotant sur le quatrième élément 4 autour d'un cinquième axe A5, et
- l'élément d'extrémité distale 7 monté pivotant sur le cinquième élément 5 autour d'un sixième axe A6.

La chaîne d'éléments est ici avantageusement configurée de sorte que :

- le premier axe A1 et le deuxième axe A2 soient concourants et perpendiculaires,
- le troisième axe A3 et le quatrième axe A4 soient concourants et perpendiculaires,
- le quatrième axe A4 et le cinquième axe A5 soient concourants et perpendiculaires, et
- le cinquième axe A5 et le sixième axe A6 soient concourants et perpendiculaires.

De façon particulière, le robot comporte un outil 8. L'outil 8 est ici une ponceuse motorisée constituée d'un corps et d'une brosse rotative ayant pour axe de rotation un septième axe A7. L'outil est ainsi destiné à venir poncer un objet P comme par exemple l'étrave d'un bateau. L'outil 8 est lié à l'élément d'extrémité distale 7 de sorte à posséder comme ledit élément d'extrémité distale 7 six degrés de liberté relativement à la base 6 (degrés de liberté identiques à ceux de l'élément d'extrémité distale 7). L'outil 8 peut ainsi être mu dans toutes les directions de l'espace en translation et en rotation relativement à la base 6. L'axe A7 de l'outil 8 peut en particulier être maintenu parallèle au plan tangent à la surface de l'objet P au point de contact entre la brosse rotative et ledit objet P.

Le robot comporte en outre un organe de pilotage qui comprend ici une poignée 9. La poignée 9 comprend par exemple une zone de saisie conformée en une tige 10 et des boutons de commande agencés sur ladite tige (non représentés et que l'on décrira par la suite).

La poignée 9 doit avoir un nombre de degrés de liberté suffisant pour que l'opérateur puisse effectuer la tâche de ponçage, à savoir a minima déplacer l'outil 8 sur toute la surface de l'objet P si l'effort de ponçage est régulé automatiquement ou déplacer l'outil 8 sur toute la surface de l'objet P et réguler l'effort de ponçage si cet effort est géré par l'opérateur. Le déplacement de l'outil 8 sur la surface de l'objet P est un mouvement surfacique à deux dimensions. La poignée 9 doit donc avoir au moins deux degrés de liberté.

De façon particulière, la poignée 9 est liée à une partie saillante 11 du deuxième élément 2. Le deuxième élément 2 ayant ici deux degrés de liberté, la poignée 9 possède également ici deux degrés de liberté identiques à ceux du deuxième élément 2. Cet agencement est particulièrement avantageux car il permet de déplacer la poignée 9 suivant deux degrés de liberté sans qu'une chaîne secondaire d'éléments ne soit nécessaire pour relier la poignée 9 à la chaîne principale d'éléments.

En outre, le deuxième élément 2 a ici un mouvement de type « tourelle » et la partie saillante 11 est conformée de sorte que la poignée 9 soit éloignée du premier axe A1 et du deuxième axe A2 afin de pouvoir déplacer facilement le deuxième élément 2 autour dudit premier axe A1 et dudit deuxième axe A2 en déplaçant la poignée 9. Ainsi, la poignée 9 a des mouvements de faibles amplitudes qui sont aussi très ergonomiques. En déplaçant la poignée 9 suivant ses deux degrés de liberté, un opérateur peut « viser » un point précis sur la surface de l'objet P.

Le robot comporte en outre des moyens de commande du robot et en particulier de la poignée 9 et de la chaîne principale d'éléments, et donc de l'outil 8 qui est lié à l'élément d'extrémité distale 7.

Les moyens de commande comprennent ici un contrôleur 13 qui exécute des programmes de commande de la chaîne principale d'éléments du robot pour assurer un couplage entre la poignée 9 et l'outil 8. Plus précisément, le contrôleur 13 est ici configuré pour gérer le couplage des mouvements de la poignée 9 et de l'outil 8 et des efforts exercés sur la poignée 9 par un opérateur et des efforts exercés par l'objet P sur l'outil 8.

Les moyens de commande comportent également des organes moteurs qui permettent de mettre en oeuvre ces couplages, chaque organe moteur étant ici agencé au niveau de l'une des articulations de la chaîne principale d'éléments de sorte à pouvoir provoquer un déplacement de l'un des éléments relativement à l'autre élément de l'articulation considérée ou à appliquer un effort entre ces éléments. Le contrôleur 13 commande les différents organes moteurs de sorte à pouvoir déplacer de façon coordonnée l'outil 8 et la poignée 9 relativement à la base 6.

Les moyens de commande comportent également ici des moyens de mesure d'efforts qui comprennent par exemple un premier capteur d'efforts multiaxe 14 qui est agencé entre l'élément d'extrémité distale 7 et l'outil 8 de sorte à pouvoir générer, à destination du contrôleur 13, des signaux représentatifs des efforts appliqués par l'objet P sur l'outil 8. L'outil 8 est ainsi lié à l'élément d'extrémité distale 7 par l'intermédiaire dudit capteur d'efforts multiaxe 14. Les moyens de mesure d'efforts comprennent en outre ici un deuxième capteur d'efforts multiaxe 15 qui est agencé entre le deuxième élément 2 et la poignée 9 de sorte à pouvoir générer, à destination du contrôleur 13, des signaux représentatifs des efforts appliqués sur la poignée 9 par l'opérateur. La poignée 9 est ainsi liée à la partie saillante 11 du deuxième élément 2 par l'intermédiaire dudit capteur d'efforts multiaxe 15.

Les capteurs d'efforts peuvent comprendre des jauges de contraintes.

Les moyens de commande comportent de plus des moyens de mesure de déplacements qui comportent ici une pluralité de capteurs de position, chaque capteur étant agencé au niveau de l'une des articulations de la chaîne principale d'éléments de sorte à pouvoir générer, à destination du contrôleur 13, des signaux représentatifs de la position relative des deux éléments formant l'articulation considérée. Les capteurs de position peuvent comprendre des codeurs angulaires.

Les capteurs de position et les capteurs d'efforts multiaxes permettent ainsi au contrôleur 13 de mesurer à tout moment les mouvements de l'outil 8 et de la poignée 9 par rapport à la base 6 et à tout moment les efforts appliqués sur la poignée 9 et sur l'outil 8.

De façon particulière, le robot comporte ici des capotages qui permettent de cacher les différents organes moteurs et les capteurs de position (qui ne sont ainsi pas visibles sur la figure 1).

A partir des signaux reçus par les capteurs de position et les capteurs d'efforts multiaxes, le contrôleur 13 commande les différents organes moteurs afin de coupler les mouvements et / ou les efforts de la poignée 9 à ceux de l'outil 8.

Le contrôleur 13 est par exemple ici configuré de sorte que, à partir des signaux générés par les capteurs de position, le contrôleur 13 commande les différents organes moteurs afin que tout mouvement de la poignée 9 autour du premier axe A1 et du deuxième axe A2 soit utilisé pour déplacer l'outil 8 sur la surface de l'objet P à poncer à l'endroit pointé par une droite D reliant le centre de la poignée 9 au point de concours du premier axe A1 et du deuxième axe A2, de telle sorte que cette droite passe toujours sensiblement à proximité du centre de l'outil 8 quelles que soient les positions du robot et de sa chaîne principale d'éléments. On note que la distance de ladite droite D au centre de l'outil 8 peut varier selon la configuration du robot et peut même être nulle pour certaines configurations du robot. Le deuxième élément 2 et le troisième élément 3 ayant avantageusement des dimensions supérieures à celles de la partie saillante 11, l'outil 8 est plus éloigné du point de rencontre du premier axe A1 et du deuxième axe A2 que la poignée 9 et les mouvements de l'outil 8 sont amplifiés par rapport à ceux de la poignée 9.

Le contrôleur 13 est également configuré de sorte que, à partir des signaux générés par les capteurs de position, le contrôleur 13 commande les différents organes moteurs afin de maintenir le septième axe de rotation A7 parallèle au plan tangent à la surface de l'objet P au point de contact de la brosse rotative sur ladite surface de l'objet P et ce quels que soient les mouvements de la poignée 9 autour du premier axe A1 et du deuxième axe A2.

En outre, le contrôleur 13 est ici configuré de sorte que, à partir des signaux générés par les deux capteurs d'efforts multiaxes, le contrôleur 13 commande les différents organes moteurs afin que l'effort de ponçage, c'est-à-dire l'effort exercé par l'outil 8 sur l'objet P, soit régulé en fonction des efforts exercés sur la poignée 9 par l'opérateur. L'effort exercé sur l'objet P par l'outil 8 perpendiculairement à la surface de l'objet P est par exemple amplifié relativement à l'effort exercé par l'opérateur sur la poignée 9 suivant la droite D.

On notera que l'effort de ponçage pourrait également être régulé automatiquement à partir des seuls signaux générés par le capteur d'efforts multiaxe 14, sans qu'il soit directement piloté par l'opérateur, sans sortir du cadre de l'invention.

Le contrôleur 13 permet ainsi un couplage de la poignée 9 à l'outil 8 pour associer à un simple mouvement de tourelle à deux degrés de liberté de la poignée 9, un mouvement plus complexe à six degrés de liberté de l'outil 8. Ainsi, bien que l'opérateur exécute un geste simple et ergonomique à deux degrés de liberté et de faible amplitude au niveau de la poignée 9, le contrôleur 13 permet à l'outil 8 de réaliser un mouvement plus complexe, à six degrés de liberté et de plus grande amplitude, nécessaire pour réaliser la tâche.

De préférence, le contrôleur 13 peut en outre également commander les différents organes moteurs de sorte à provoquer un déplacement de la poignée 9 relativement à la base 6 et/ou à appliquer un effort sur ladite poignée 9 pour s'opposer aux mouvements imposés par l'opérateur à la poignée 9, pour guider les mouvements imposés par l'opérateur à la poignée 9 ou pour assister les mouvements imposés par l'opérateur à la poignée 9. Le contrôleur 13 permet ainsi également d'assurer un retour d'efforts à l'opérateur ou de l'assister ou de le guider dans ses gestes.

De façon particulière, les moyens de commande comportent un système de mesure externe 16, qui comprend par exemple un dispositif de vision comprenant une caméra, ledit système de mesure externe 16 étant associé au contrôleur 13. Ainsi, le contrôleur 13 pourra utiliser les signaux en provenance du système de mesure externe 16 en complément ou en remplacement des signaux des différents capteurs de position pour déterminer la position de l'outil 8 et de la poignée 9 relativement à la base 6 et/ou la position de l'outil 8 par rapport à l'objet P pour commander en conséquence les différents organes moteurs. Le contrôleur 13 pourra également utiliser les signaux en provenance du système de mesure externe 16 pour déterminer l'avancement de la tâche de ponçage et commander en conséquence les différents organes moteurs.

Les caractéristiques principales de ce premier mode de réalisation sont donc :

- la présence de deux ports d'interaction implantés directement sur le robot, l'un avec l'opérateur via la poignée 9 et l'autre avec l'environnement extérieur au robot via l'outil 8 ;
- le fait que la poignée 9 soit solidarisée à un élément de la chaîne principale d'éléments autre que l'élément d'extrémité distale 7, ce qui permet de l'éloigner de l'outil 8 et de lui faire faire des mouvements différents et de moindre amplitude que ceux de l'outil 8 et de l'élément d'extrémité distale 7 auquel l'outil 8 est relié ;
- la présence d'un contrôleur 13 permettant un couplage entre les mouvements de la poignée 9 et ceux de l'outil 8 ;
- le fait que les différents axes de rotation du robot soient motorisés, ce qui permet d'assister l'opérateur en effort et aussi de fournir un retour d'effort au niveau de la poignée 9 ;
- le fait que le robot intègre des moyens de mesure des efforts exercés par l'opérateur sur la poignée 9 et des efforts exercés par l'objet P sur l'outil 8.

Le robot de co-manipulation du premier mode de réalisation selon l'invention permet d'assister l'opérateur dans sa tâche de ponçage.

Comme il a été indiqué, un tel ponçage doit être effectué à l'aide d'une brosse rotative qu'il faut positionner en chaque point de la surface de l'objet P. Avec une brosse rotative cylindrique, telle que celle illustrée ici en référence aux figures 1 à 5, il faut en outre maintenir l'axe de rotation de ladite brosse parallèle au plan tangent localement à cette surface au point de contact de la brosse rotative contre ladite surface de l'objet P. Il faut enfin contrôler l'effort appliqué par la brosse rotative sur l'objet P. Ceci assure une bonne qualité du ponçage.

Traditionnellement, cette tâche était effectuée par l'opérateur sans assistance. L'opérateur devait ainsi effectuer des gestes de grande amplitude pour poncer toute la surface de l'objet P, ce qui était fatiguant. Il devait en outre également effectuer de grands mouvements du poignet pour que la brosse rotative demeure tangente à la surface de l'objet P, ce qui était peu ergonomique dans certaines situations où le poignet était très fléchi. Enfin il devait appliquer des efforts importants à la fois pour porter l'outil 8 et pour poncer l'objet P, ce qui était encore une fois fatiguant.

Le robot de co-manipulation selon le premier mode de réalisation permet de faciliter la tâche de ponçage pour l'opérateur qui reste cependant le seul à contrôler l'outil 8, l'outil 8 n'étant pas déplacé tant que l'opérateur ne déplace pas la poignée 9. Les mouvements de la poignée 9 sont avantageusement plus simples et de plus faible amplitude que ceux de l'outil 8 tout en permettant de commander les degrés de liberté essentiels de la tâche à savoir le déplacement de l'outil 8 sur toute la surface de l'objet P si l'effort de ponçage est régulé automatiquement ou déplacer l'outil 8 sur toute la surface de l'objet P et réguler l'effort de ponçage si cet effort est géré par l'opérateur.

Bien entendu le premier mode de réalisation décrit n'est pas limitatif et on peut y apporter des variantes sans sortir du cadre de l'invention tel que défini par les revendications.

Il serait en particulier possible d'utiliser toute autre chaîne principale d'éléments adaptée à la tâche à réaliser. Il sera ainsi possible d'utiliser toute autre cinématique que celle illustrée, par exemple un robot de co-manipulation de type SCARA, DELTA, un robot redondant ou un robot parallèle.

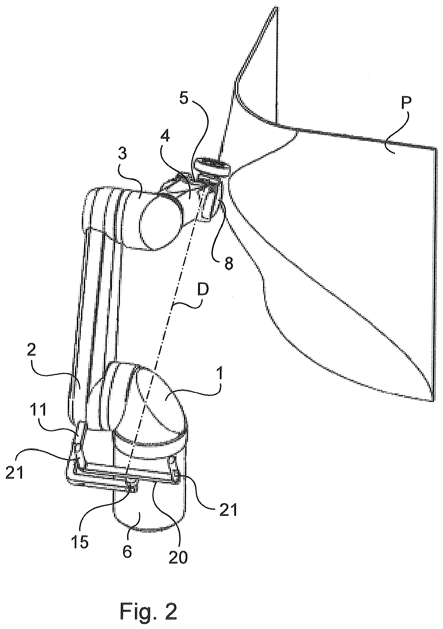

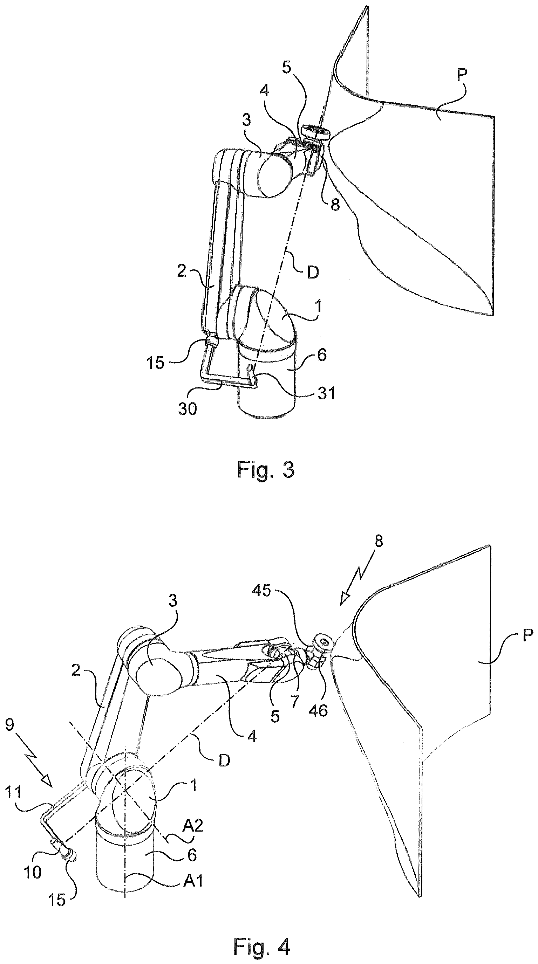

La poignée 9 pourra prendre n'importe quelle forme adaptée à une saisie et une manipulation ergonomique par l'opérateur. Par exemple, dans une première variante du premier mode de réalisation illustrée à la figure 2, la poignée 9 comporte deux zones de saisie, au lieu d'une seule comme précédemment décrit, de sorte que la poignée 9 peut être manipulée à deux mains. La poignée 9 comporte ainsi un corps 20 muni de deux zones de saisies chacune conformée en un manche 21, chaque manche 21 étant destiné à être saisi par une main. Le robot pourra alors comporter uniquement le deuxième capteur d'efforts multiaxe 15 agencé entre le corps 20 de la poignée 9 et la partie saillante 11 du deuxième élément 2, comme illustré, ou comporter deux capteurs d'efforts multiaxes agencés respectivement entre chaque manche 21 et le corps 20 de la poignée. Dans une deuxième variante du premier mode de réalisation illustrée à la figure 3, la poignée 9 comporte elle-même une partie saillante 30 qui est liée à l'une de ses extrémités au deuxième élément 2 (qui ne comporte plus de partie saillante lui-même) et qui porte à son autre extrémité une zone de saisie conformée en une tige 31. La partie saillante 30 de la poignée 9 permet d'éloigner la tige 31 du premier axe A1 et du deuxième axe A2. Le deuxième capteur d'efforts multiaxe 15 est alors agencé entre le deuxième élément 2 et la partie saillante 30 de la poignée 9.

On peut également avoir en fonction de la tâche à accomplir un outil 8 différent de ce qui a été décrit.

L'outil 8 pourra ainsi comporter un préhenseur comme par exemple une pince motorisée à deux mors qui pourra agir directement ou non sur l'environnement. Dans une troisième variante du premier mode de réalisation illustrée à la figure 4, l'outil 8 comporte une pince motorisée à deux mors 45 et une ponceuse motorisée 46 qui est portée par ladite pince 45. En étant enserrée dans les mors de la pince 45, la ponceuse motorisée 46 est rendue solidaire de ladite pince 45 elle-même liée à l'élément d'extrémité distale 7. Selon une autre variante, la pince motorisée à deux mors pourra porter un autre instrument maintenu par ladite pince.

On note encore que l'on pourra utiliser à la place de la pince à deux mors un préhenseur plus complexe comme par exemple un préhenseur dextre ou une main robotique. On notera également que l'on pourra pour certaines tâches agir sur l'environnement avec un outil passif comme par exemple une brosse non rotative ou un tournevis. On pourra encore agir sur l'environnement directement avec la pince ou la main robotique, c'est-à-dire que la pince ou la main robotique ne portera aucune ponceuse ou autre instrument. On pourra enfin dans certains cas agir sur l'environnement directement avec l'élément d'extrémité distale du robot ou avec le capteur d'efforts multiaxes 14, aucun outil, pince ou autre préhenseur n'étant alors lié à l'élément d'extrémité distale.

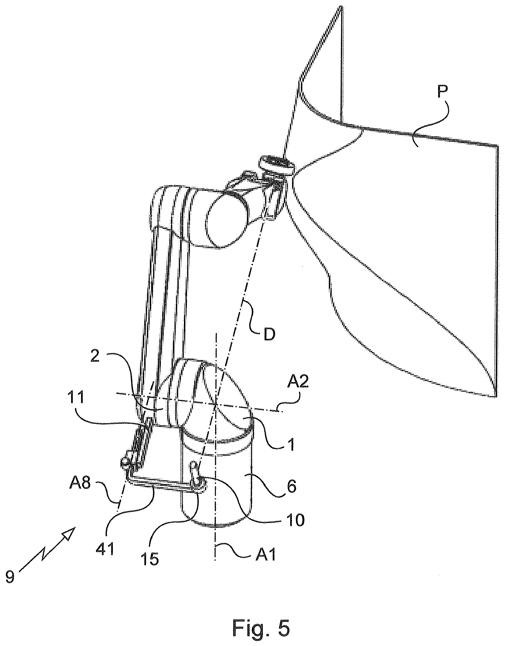

Des mobilités pourront être insérées entre la poignée 9 et le deuxième élément 2 notamment pour enrichir le contrôle de l'opérateur sur la tâche à effectuer. Dans une quatrième variante du premier mode de réalisation illustrée à la figure 5, la poignée 9 est liée à la partie saillante 11 du deuxième élément 2 par l'intermédiaire d'une chaîne secondaire d'éléments. Ladite chaîne secondaire d'éléments comporte ici un corps supplémentaire 41 qui est monté sur le deuxième élément 2 de la chaîne principale d'éléments de sorte à être mobile en translation le long d'un huitième axe A8 par rapport audit deuxième élément 2, la poignée 9 étant liée audit corps supplémentaire 41 par l'intermédiaire du deuxième capteur d'efforts multiaxe 15 de sorte à avoir les mêmes degrés de liberté que ledit corps supplémentaire 41. Ainsi la poignée 9 possède trois degrés de liberté tandis que l'élément d'extrémité distale 7, et donc l'outil 8, en possèdent toujours six. Le robot présente donc une structure arborescente, avec une chaîne cinématique principale entre la base 6 et l'élément d'extrémité distale 7 portant l'outil et une chaîne cinématique secondaire entre la base 6 et le corps supplémentaire 41 portant la poignée 9. La mobilité supplémentaire de la poignée 9 selon le huitième axe A8 peut être utilisée pour mettre en oeuvre des couplages plus évolués entre la poignée 9 et l'outil 8. Ainsi, le contrôleur 13 pourra être configuré de sorte que les mouvements de la poignée 9 autour du premier axe A1 et du deuxième axe A2 soient utilisés pour déplacer l'outil 8 sur la surface à poncer de l'objet P tout en maintenant le septième axe A7 parallèle au plan tangent à la surface de l'objet P au point de contact de la brosse rotative contre ledit objet P, et de sorte que les mouvements de la poignée 9 le long du huitième axe A8 soient utilisés pour réguler l'effort d'appui de l'outil 8 sur l'objet P, cet effort étant avantageusement amplifié par rapport à celui appliqué par l'opérateur sur la poignée 9.

Le robot sera avantageusement configuré pour que le huitième axe A8 soit parallèle à la droite D et soit concourant avec l'axe A2 de sorte que le mouvement de la poignée 9 le long dudit huitième axe A8 soit découplé des mouvements de type « tourelle » autour du premier axe A1 et du deuxième axe A2.

Dans la pratique, sur les robots illustrés sur les figures 1 à 5, le rapport d'amplification en déplacement entre la poignée 9 et l'outil 8, 45, 46 est directement fonction d'une part des dimensions de la partie saillante 11 du deuxième élément 2, du corps 41 et du corps 20, 30 de la poignée 9 qui définissent la distance entre la poignée 9 et le point de concours du premier axe A1 et du deuxième axe A2 et d'autre part des dimensions du deuxième élément 2, du troisième élément 3, du quatrième élément 4, du cinquième élément 5, de l'élément d'extrémité distale 7, du capteur d'effort 14, de l'outil 8, 45, 46, et de la configuration des éléments 2 à 7 qui définissent la distance entre l'outil 8 et le point de concours du premier axe A1 et du deuxième axe A2.

Sur le robot illustré sur la figure 5, en modifiant la distance entre la poignée 9 et le premier axe de rotation A1 et le deuxième axe de rotation A2, il est possible de modifier ledit rapport d'amplification. Cette modification peut être effectuée lors de l'initialisation du robot. La liaison entre le corps supplémentaire 41 et le deuxième élément 2 pourra ainsi être réalisée par un simple système de glissière passive, c'est à dire non motorisé, permettant de modifier la distance entre la poignée 9, le deuxième axe A2 et le premier axe A1, le corps supplémentaire 41 étant fixé au deuxième élément 2 par exemple à l'aide de vis avant la mise en service du robot. Cette modification peut aussi être effectuée de façon continue au cours de la tâche de ponçage si le mouvement de translation du corps supplémentaire 41 relativement au deuxième élément 2 est motorisé. Dans tous les cas, cette modification sera prise en compte dans le contrôleur 13 pour piloter le robot correctement quelle que soit la distance entre la poignée 9 et le premier axe A1 et le deuxième axe A2.

Bien entendu, il sera possible de rajouter d'autres mobilités sur la chaîne secondaire d'éléments. La translation suivant le huitième axe A8 n'est fournie qu'à titre d'exemple. On pourrait ainsi ajouter entre le deuxième élément 2 et la poignée 9 plusieurs mouvements de translation, ou un ou plusieurs mouvements de rotation, ou encore une combinaison des deux. On pourrait encore utiliser pour la chaîne secondaire d'éléments une structure parallèle, ou même arborescente, afin que la poignée 9 puisse être manipulée à deux mains par un même opérateur ou par deux opérateurs distincts.

On pourra par exemple placer la partie saillante 11 du deuxième élément 2 dans le prolongement dudit deuxième élément 2 de sorte que ladite partie saillante 11 s'étende du côté opposé au troisième élément 3, la poignée 9 étant liée à la partie saillante 11 du deuxième élément 2 par l'intermédiaire d'une chaîne secondaire d'éléments. Ladite chaîne secondaire d'éléments comportera avantageusement un corps supplémentaire qui sera monté pivotant sur la partie saillante 11 du deuxième élément 2 de la chaîne d'éléments et qui sera commandé par le contrôleur 13 de sorte à former avec la partie saillante 11 du deuxième élément 2 d'une part et avec le deuxième élément 2 et l'axe d'extension principale du troisième élément 3 et du quatrième élément 4 d'autre part une structure en pantographe assurant que le rapport entre la distance du centre de la poignée 9 au premier point de concours du premier axe A1 et du deuxième axe A2 et entre la distance du premier point de concours au deuxième point de concours du quatrième axe A4, du cinquième axe A5 et du sixième axe A6 reste constant quels que soient les mouvements de la poignée. Dans ce cas, la droite D pourra passer en permanence par le deuxième point de concours du quatrième axe A4, du cinquième axe A5 et du sixième axe A6, et par le centre de l'outil 8, si on utilise pour réaliser les mouvements autour du quatrième axe A4, du cinquième A5 et du sixième axe A6 un poignet centré et que le centre de l'outil 8 se trouve au deuxième point de concours.

Il sera encore possible de lier la poignée 9 à tout autre élément de la chaîne principale d'éléments, autre que l'élément d'extrémité distale 7, soit directement soit par l'intermédiaire d'une chaîne secondaire d'éléments, et/ou par des moyens de mesure d'efforts comme un capteur d'efforts multiaxes, les seules limitations étant d'une part que la poignée 9 devra avoir un nombre suffisant de degrés de liberté pour pouvoir commander les mouvements caractéristiques de la tâche à effectuer, ici deux degrés de liberté pour le ponçage de la surface de l'objet P, et d'autre part que la poignée ne soit pas liée à l'élément d'extrémité distale 7 pour que ses mouvements ne soient pas identiques à ceux de l'outil 8, qu'ils puissent être plus simples, et que l'opérateur puisse être éloigné de la zone de travail.

On notera que les couplages entres les mouvements et les efforts de la poignée 9 et de l'outil 8 peuvent avantageusement être modifiées en fonction de la tâche à accomplir et / ou au cours de cette tâche. On pourra par exemple sur le robot selon la quatrième variante du premier mode de réalisation illustrée à la figure 5 utiliser le mouvement le long du huitième axe A8 pour modifier le facteur d'amplification entre les déplacements de la poignée 9 et de l'outil 8, en utilisant par exemple un grand rapport d'amplification pour un premier brossage grossier et un rapport plus faible pour une finition plus précise. Cette modification pourra se faire de manière continue ou discrète, et ce de manière automatique ou contextuelle, par exemple à partir des informations du système de mesure externe 16, ou encore de façon manuelle en appuyant sur des boutons de commande de la poignée 9. Ainsi on pourra démarrer le travail avec une distance entre la poignée 9 et le premier axe A1 et le deuxième A2 faible et fixe, ce qui correspond à un grand facteur d'amplification. L'opérateur pourra ensuite s'il juge le ponçage grossier suffisant appuyer sur un bouton de commande, ce qui figera tous les mouvements sauf celui le long du huitième axe A8, lui permettant ainsi d'augmenter la distance entre la poignée et le premier axe A1 et le deuxième A2. Le contrôleur 13 sera reconfiguré automatiquement en conséquence. Une fois cette modification effectuée, l'opérateur pourra relâcher le bouton de commande, la distance entre la poignée et le premier axe A1 et le deuxième A2 étant alors de nouveau fixe mais plus élevée que précédemment, ce qui correspond à un facteur d'amplification plus faible adapté à la finition du brossage. Le robot pourra aussi ne pas comporter de moyens de modification de la configuration du robot et du contrôleur 13, le contrôleur 13 étant alors toujours activé suivant un mode nominal.

Des boutons de commande de la poignée 9 pourront aussi être utilisés pour d'autres fonctions comme agir sur l'outil, la pince ou d'autres préhenseurs par exemple pour la mise en route du moteur de la brosse rotative ou la commande de la fermeture de la pince à deux mors précitée.

On notera que pour certains objets P, le maintien de l'outil 8 au contact dudit objet P et/ou de l'axe A7 dudit outil 8 parallèle au plan tangent à la surface de l'objet P au point de contact de la brosse rotative sur ladite surface de l'objet P peut nécessiter un mouvement du deuxième élément 2 qui va accompagner et amplifier, ou au contraire, s'opposer au mouvement de la poignée 9 autour du deuxième axe A2. Pour éviter cela, on peut soit n'utiliser le robot que pour le ponçage de certains objets P adaptés à la cinématique dudit robot, soit ajouter des mobilités au robot, au niveau de la chaîne principale d'éléments ou entre la chaîne principale d'éléments et la poignée 9, soit encore utiliser un outil différent, par exemple une brosse torique à la place de la brosse cylindrique illustrée aux figures 1 à 5. Le contact entre une brosse torique et l'objet P étant quasi ponctuel, une telle brosse ne nécessite pas de maintenir l'axe A7 de l'outil 8 parallèle au plan tangent à la surface de l'objet P au point de contact de la brosse rotative sur ladite surface de l'objet P et les mobilités autour du troisième axe A3, du quatrième axe A4, du cinquième axe A5 et du sixième axe A6 peuvent être utilisées pour maintenir la brosse torique au contact de l'objet P à l'endroit visé par la droite D (reliant le centre de la poignée 9 au point de concours du premier axe A1 et du deuxième axe A2) sans interférer avec les mouvements du deuxième élément 2 contrôlés par l'utilisateur.

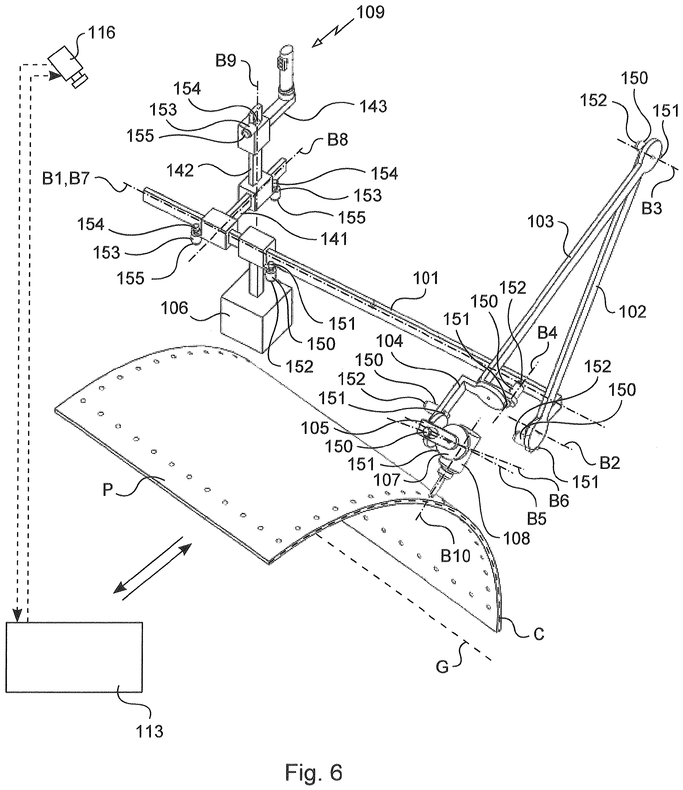

En référence à la figure 6, un deuxième mode de réalisation de l'invention va être à présent décrit. Les éléments en commun avec le premier mode de réalisation conservent leur numérotation augmentée d'une centaine.

Le robot de co-manipulation selon le deuxième mode de réalisation est dédié à assister l'opérateur dans le perçage de trous sur un objet comme une pièce P de forme cylindrique de la carlingue d'un avion, ces trous étant destinés à recevoir des rivets qui viendront fixer cette pièce sur d'autres pièces de l'avion qui lui sont contiguës. La pièce P est donc définie ici par une droite génératrice G selon laquelle la pièce s'étend et par une courbe directrice C circulaire.

Le robot de co-manipulation selon le deuxième mode de réalisation comporte une chaîne principale d'éléments à six degrés de liberté. La chaîne principale d'éléments est composée de:

- un élément d'extrémité proximale 106 formant une base du robot,
- un premier élément 101 monté sur la base 106 de sorte à être mobile en translation le long d'un premier axe B1 de translation par rapport à la base 106,

- un deuxième élément 102 monté pivotant sur le premier élément 101 autour d'un deuxième axe B2,
- un troisième élément 103 monté pivotant sur le deuxième élément 102 autour d'un troisième axe B3,
- un quatrième élément 104 monté pivotant sur le troisième élément 103 autour d'un quatrième axe B4,
- un cinquième élément 105 monté pivotant sur le quatrième élément 104 autour d'un cinquième axe B5, et
- un élément d'extrémité distale 107 monté pivotant sur le cinquième élément 105 autour d'un sixième axe B6.

Le robot de co-manipulation comporte en outre une chaîne secondaire d'éléments à trois degrés de liberté. La chaîne secondaire d'éléments est composée de :

- un premier corps 141 monté sur le premier élément 101 de sorte à être mobile en translation le long d'un septième axe de translation B7, ici confondu avec le premier axe B1, relativement au premier élément 101,
- un deuxième corps 142 monté sur le premier corps 141 de sorte à être mobile en translation le long d'un huitième axe B8 de translation relativement au premier corps 141, et
- un troisième corps 143 monté sur le deuxième corps 142 de sorte à être mobile en translation le long d'un neuvième axe B9 de translation relativement au deuxième corps 142.

La poignée 109 est directement liée au troisième corps 143 de sorte à être solidaire du troisième corps 143. La poignée 109 comporte donc trois degrés de liberté, le mouvement le long du septième axe B7 étant une combinaison des mouvements du premier élément 101 et du premier corps 141.

L'outil 108 est ici solidarisé à l'élément d'extrémité distale 107. Il s'agit ici d'une perceuse comprenant un corps motorisé et un mandrin qui porte une mèche de perçage s'étendant selon un dixième axe B10 et pouvant tourner autour dudit dixième axe B10.

Ainsi, contrairement au robot de co-manipulation selon le premier mode de réalisation illustré à la figure 1, dans le robot de co-manipulation selon le deuxième mode de réalisation, tous les degrés de liberté ne sont pas partagés entre la chaîne cinématique principale (définie comme la chaîne d'éléments allant de la base 106 à l'outil 108) et la chaîne cinématique secondaire (définie comme la chaîne d'éléments et de corps allant de la base 106 à la poignée 109). Le robot de co-manipulation selon le deuxième mode de réalisation a donc un nombre total de degrés de liberté égal à la somme des mobilités nécessaires au déplacement de l'outil 108 (soit six degrés de liberté ici pour pouvoir percer des trous en n'importe quel point de la pièce P et suivant n'importe quelle orientation) et de la poignée 109 (soit trois degrés de liberté ici pour pouvoir commander les degrés de liberté essentiels de la tâche de perçage, qui sont un mouvement linéaire le long de la génératrice G, un mouvement circulaire le long de la courbe directrice C et un mouvement linéaire perpendiculaire à la surface de l'objet P pour effectuer le perçage). Ledit robot a ainsi neuf degrés de liberté.

Le contrôleur 113 du robot de co-manipulation est configuré de sorte à coupler les mouvements de la poignée 109 et de l'outil 108.

A cet effet, les moyens de commande comportent un premier groupe d'organes moteurs : chaque organe moteur comporte un moteur 150 et un réducteur 151 associé audit moteur 150. Chaque moteur 150 est agencé au niveau d'une des liaisons mécaniques de la chaîne principale d'éléments de sorte à permettre un déplacement de l'un des éléments de ladite liaison relativement à l'autre élément de ladite liaison via le réducteur 151 associé. Ces réducteurs 151 sont par exemple des réducteurs à cabestan à câble, en translation pour le réducteur associé à la liaison entre le premier élément 101 et la base 106 et en rotation pour les autres. Ces réducteurs 151 sont bien connus de l'art antérieur et ne seront pas détaillés ici. Ils ont la particularité d'être réversibles et d'avoir un très bon rendement. De préférence, les moteurs 150 sont des moteurs à courant continu à rotor sans fer. Il est dès lors possible d'avoir une très bonne estimation des efforts appliqués sur l'outil 108 par la pièce cylindrique P en mesurant directement les courants moteurs. Les moyens de mesure d'efforts comportent donc ici des moyens de mesure des courants moteurs (non illustrés ici). Les moyens de mesure de déplacements comportent en outre des capteurs de position 152, chaque moteur 150 étant associé un capteur de position 152.

De plus, les moyens de commande comportent un deuxième groupe d'organes moteurs : chaque organe moteur comporte un moteur 153 et un réducteur 154 associé audit moteur 153. Chaque moteur 153 est agencé au niveau d'une des liaisons mécaniques de la chaîne secondaire d'éléments de sorte à permettre un déplacement de l'un des éléments de ladite liaison relativement à l'autre élément de ladite liaison via le réducteur 154 associé. Ces réducteurs 154 peuvent être, comme sur la chaîne principale d'éléments, des réducteurs à câbles et les moteurs 153 des moteurs à courant continu à rotor sans fer. Les moyens de mesure d'efforts comportent ainsi des moyens de mesure des courants moteurs des moteurs du deuxième groupe d'organes moteurs (non illustrés ici). Les moyens de mesure de déplacements comportent en outre des capteurs de position 155, chaque moteur 153 du deuxième groupe d'organes moteurs étant associé à un capteur de position 155.

Les signaux générés par les différents capteurs de position et par les moyens de mesure des courants moteurs sont transmis au contrôleur 113 qui les utilise pour commander les moteurs pour assurer un couplage de la poignée 109 à l'outil 108.

De préférence, le contrôleur 113 est ici configuré de sorte que :

- tout mouvement de la poignée 109 le long du septième axe B7 entraîne un déplacement de l'outil 108 le long de la droite génératrice G,
- tout mouvement le long du neuvième axe B9 de la poignée 109 entraîne un déplacement de l'outil 108 le long de la courbe directrice C, et
- tout mouvement le long du huitième axe B8 de la poignée 109 entraîne un déplacement de l'outil 108 perpendiculairement à la pièce cylindrique P et notamment une avancée de l'outil 108 en direction de la pièce cylindrique P perpendiculairement à ladite pièce (mouvement permettant d'effectuer les perçages sur ladite pièce).

Les mouvements de translation en trois dimensions de la poignée 109 le long du septième axe B7, du huitième axe B8 et du neuvième axe B9 sont ainsi transformés en mouvements plus complexes de translation et de rotation en six dimensions de l'outil 108 sur la surface de la pièce cylindrique P et perpendiculairement à celle-ci et sont en outre avantageusement amplifiés.

Les moteurs 153 du deuxième groupe d'organes moteurs pourront également être commandés par le contrôleur 113, comme dans le premier mode de réalisation, pour guider les mouvements de l'opérateur, par exemple pour que la poignée 109 soit contrainte à suivre une trajectoire cible permettant de percer la pièce cylindrique P en des points particuliers.

Les moteurs des différents groupes d'organes moteurs peuvent également être commandés par le contrôleur 113 de sorte que l'effort exercé par l'outil 108 sur la pièce cylindrique P soit régulé en fonction des efforts exercés sur la poignée 109 par l'opérateur. L'effort exercé sur la pièce cylindrique P par l'outil 108 est par exemple amplifié relativement à l'effort exercé par l'opérateur sur la poignée 109.

Le robot de co-manipulation selon le deuxième mode de réalisation de l'invention permet donc d'assister l'opérateur dans sa tâche de perçage.

Comme il a été indiqué, pour chaque trou, il faut positionner l'outil 108 perpendiculairement à la pièce cylindrique P puis effectuer un geste suivant le dixième axe B10 en direction de ladite pièce P.

Traditionnellement, cette tâche était effectuée par l'opérateur sans assistance sur de grandes pièces de géométrie potentiellement complexe. L'opérateur devait effectuer des gestes de grande amplitude, ce qui était fatiguant. Il devait également effectuer de grands mouvements du poignet pour être toujours perpendiculaire à la surface de la pièce cylindrique P, ce qui était peu ergonomique dans certaines situations où le poignet était très fléchi. Enfin il devait appliquer des efforts importants à la fois pour porter l'outil 108 et pour effectuer les perçages, ce qui est encore une fois fatiguant.

Le robot de co-manipulation selon le deuxième mode de réalisation de l'invention permet de grandement faciliter la tâche de perçage pour l'opérateur qui reste cependant le seul à contrôler l'outil 108, l'outil 108 n'étant pas déplacé tant que l'opérateur ne déplace pas la poignée 109. Les mouvements de la poignée 109 sont avantageusement plus simples et de plus faibles amplitudes que ceux de l'outil 108 bien que la poignée 109 permette de commander les degrés de liberté essentiels de la tâche de perçage à savoir le déplacement de l'outil 108 sur la surface de la pièce cylindrique P et le déplacement de l'outil 108 en direction de ladite pièce P pour la percer.

Dans le premier mode de réalisation et ses variantes illustrés par les figures 1 à 5, les liaisons pivots entre la base 6 et la poignée 9 permettent d'avoir naturellement un bras de levier entre la poignée 9 et l'outil 8. Par conséquent, il s'avère possible de réaliser naturellement des mouvements de l'outil 8 de plus grande amplitude que ceux de la poignée 9 sans qu'il soit nécessaire pour le robot d'avoir un nombre de degrés de liberté égal à la somme des mobilités nécessaires sur la poignée 9 (soit deux pour le premier mode de réalisation et ses variantes illustrés par les figures 1 à 5) et des mobilités nécessaire sur l'outil 8 (soit six pour le premier mode de réalisation et ses variantes illustrés par les figures 1 à 5). Un tel robot de co-manipulation a donc une architecture plus simple. Toutefois une partie des couplages entre la poignée 9 et l'outil 8 sont imposés mécaniquement. Dans le deuxième mode de réalisation, au contraire, la présence de liaisons glissières entre la base 106 et la poignée 109 ne permet plus de bénéficier d'un bras de levier naturel. Le robot de co-manipulation selon le deuxième mode de réalisation s'avère donc plus complexe. Toutefois tous les couplages entre la poignée 109 et l'outil 108 peuvent être alors gérés par le contrôleur 113.

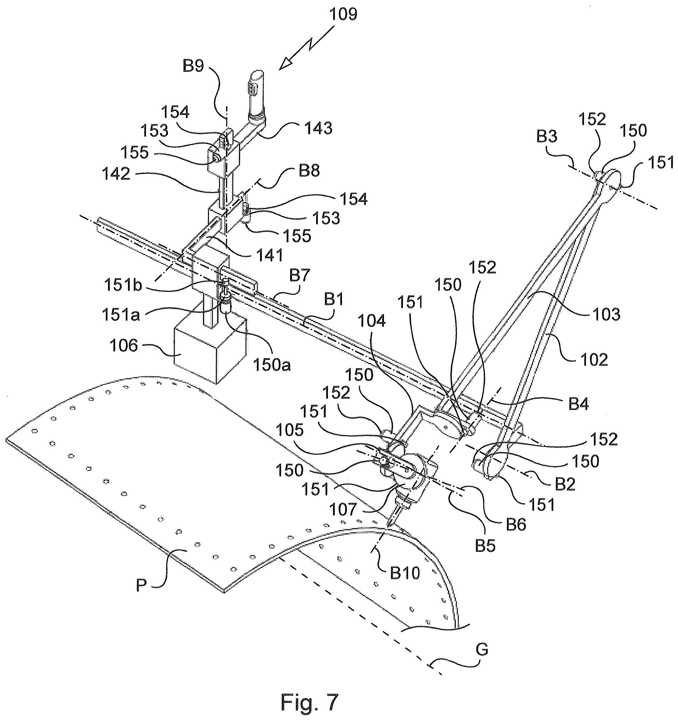

Selon une première variante du deuxième mode de réalisation illustrée à la figure 7, une partie des couplages entre la poignée 109 et l'outil 108 est aussi imposée mécaniquement. Ainsi, le premier corps 141 de la chaîne secondaire d'éléments est monté mobile en translation directement sur la base 106 le long du septième axe de translation B7, ici parallèle mais non confondu au premier axe B1. En outre, le robot ne comporte ici qu'un unique moteur 150a pour permettre le déplacement du premier élément 101 relativement à la base 106 et le déplacement du premier corps 141 relativement à la base 106. Ledit moteur 150a est agencé de sorte à entraîner à la fois le premier élément 101 via un premier réducteur 151a et le premier corps 141 via un deuxième réducteur 151b. En utilisant des rapports de réduction différents pour le premier réducteur 151a et le deuxième réducteur 151b, il est possible de coupler mécaniquement et à moindre coût les mouvements de la poignée et de l'outil respectivement le long du septième axe B7 et le long du premier axe B1.

Cette première variante permet ainsi d'économiser un moteur par rapport à la configuration du deuxième mode de réalisation illustré à la figure 6 (il est en effet alors nécessaire d'avoir un premier moteur 150 pour l'entraînement en translation du premier élément 101 relativement à la base 106 selon le premier axe B1 et un deuxième moteur 153 pour l'entraînement en translation du premier corps 141 relativement au premier élément 101 selon le septième axe B7). Toutefois le rapport d'amplification entre les mouvements de l'outil 108 le long du premier axe B1 et de la poignée 109 le long du septième axe B7 est fixe. En conséquence le rapport d'amplification entre le mouvement de l'outil 108 le long de la génératrice G et le mouvement de la poignée 109 le long du septième axe B7 est fixe et il n'est donc pas possible de modifier ce couplage en modifiant les paramètres du contrôleur 113 sur ces mouvements.

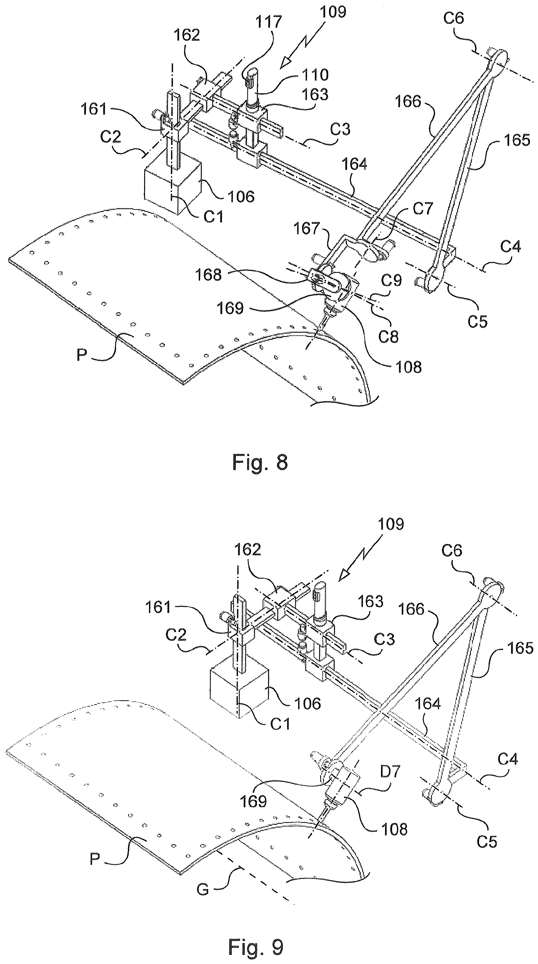

Selon une deuxième variante du deuxième mode de réalisation, illustrée à la figure 8, les couplages entre la poignée 109 et l'outil 108 sont entièrement libres comme pour le robot selon le deuxième mode de réalisation illustré à la figure 6 mais la répartition des mobilités entre la chaîne principale d'éléments et la chaîne secondaire d'éléments est différente. Ici tous les mouvements de la poignée 109 sont assurés par la chaîne principale d'éléments qui comporte les neuf degrés de liberté nécessaires aux mouvements de la poignée 109 et de l'outil 108.

La chaîne principale d'éléments est alors composée de :

- un élément d'extrémité proximale 106 formant une base du robot,
- un premier élément 161 monté sur la base 106 de sorte à être mobile en translation le long d'un premier axe C1 relativement à la base 106,
- un deuxième élément 162 monté sur le premier élément 161 de sorte à être mobile en translation le long d'un deuxième axe C2 relativement au premier élément 161,
- un troisième élément 163 monté sur le deuxième élément 162 de sorte à être mobile en translation le long d'un troisième axe C3 relativement au deuxième élément 162,
- un quatrième élément 164 monté sur le troisième élément 163 de sorte à être mobile en translation le long d'un quatrième axe C4 relativement au troisième élément 163,
- un cinquième élément 165 monté pivotant sur le quatrième élément 164 autour d'un cinquième axe C5,
- un sixième élément 166 monté pivotant sur le cinquième élément 165 autour d'un sixième axe C6,
- un septième élément 167 monté pivotant sur le sixième élément 166 autour d'un septième axe C7,
- un huitième élément 168 monté pivotant sur le septième élément 167 autour d'un huitième axe C8,
- un élément d'extrémité distale 169 monté pivotant sur le huitième élément 168 autour d'un neuvième axe C9.

La chaîne principale d'éléments comporte ainsi neuf degrés de liberté. Elle permet de déplacer à la fois l'outil 108 en tout point de la pièce cylindrique P perpendiculairement à celle-ci pour effectuer correctement les perçages et à la fois la poignée 109 suivant trois degrés de liberté.

La poignée 109 comprend par exemple une zone de saisie conformée en un manche 110 et des boutons de commande 117 agencés sur ledit manche 110. Tout comme dans le deuxième mode de réalisation de l'invention illustré à la figure 6, la poignée 109 est directement liée à l'un des éléments de la chaîne principale d'éléments de sorte à être solidaire dudit élément. Ici la poignée 109 est directement fixée au troisième élément 163.

La structure du robot selon la deuxième variante du deuxième mode de réalisation de l'invention confère ainsi trois degrés de liberté en translation à la poignée 109 et six degrés de liberté à l'outil 108.

De façon particulière, le contrôleur 113 utilise les mêmes types de couplages entre la poignée 109 et l'outil 108 que pour le robot du deuxième mode de réalisation illustré à la figure 6. Le contrôleur est ainsi configuré de sorte que :

- les mouvements de la poignée 109 selon le premier axe C1 et le troisième axe C3 entraînent un mouvement de l'outil 108 sur la surface cylindrique de la pièce P,
- les mouvements de la poignée 109 selon le deuxième axe C2 entraînent un mouvement de l'outil 108 perpendiculairement à la surface cylindrique de la pièce P.

Les mouvements de la poignée 109 sont ici de faibles amplitudes, ce qui permet une manipulation ergonomique et sûre. Les mouvements de l'outil 108 sont de plus grandes amplitudes et permettent de réorienter la poignée 109 pour percer correctement tous les trous.

Dans cette variante, l'outil 108 possède six degrés de liberté par rapport à la poignée 109, ce qui permet d'effectuer des perçages sur différents types de pièces et, en particulier, sur des pièces cylindriques ayant une droite génératrice non parallèle au quatrième axe C4, au cinquième axe C5 et au sixième axe C6.

Selon une troisième variante du deuxième mode de réalisation illustrée à la figure 9, l'outil 108 possède un nombre de degrés de liberté plus faible que dans les autres variantes du deuxième mode de réalisation. En effet, dans cette troisième variante, la pièce cylindrique P est agencée de sorte que sa droite génératrice G soit parallèle au quatrième axe C4, au cinquième axe C5 et au sixième axe C6. Dans ces conditions, il suffit que l'outil 108 ait quatre degrés de liberté pour que la tâche de perçage soit effectuée correctement, c'est-à-dire pour pouvoir faire décrire à l'outil 108 un mouvement le long de la surface cylindrique de la pièce P, pour pouvoir toujours orienter l'outil 108, et notamment l'axe selon lequel s'étend la mèche de perçage, perpendiculairement à ladite surface cylindrique, et pour effectuer un mouvement de perçage perpendiculaire à la surface de la pièce P.

Ainsi, dans la troisième variante du deuxième mode de réalisation, le robot est conformé de sorte que la poignée 109 ait trois degrés de liberté relativement à la base 106 et que l'outil 108 ait quatre degrés de liberté relativement à la poignée 109. Ainsi, le robot selon cette troisième variante du deuxième mode de réalisation est un robot redondant à quatre degrés de liberté et sept liaisons cinématiques. Ses mouvements opérationnels permettent de déplacer l'outil 108 suivant quatre degrés de liberté et ses mouvements internes de réaliser avec la poignée 109 des mouvements différents de ceux de l'outil 108 suivant trois degrés de liberté.

A cet effet, la chaîne principale d'éléments est composée ici de la base 106, du premier élément 161, du deuxième élément 162, du troisième élément 163, du quatrième élément 164, du cinquième élément 165, du sixième élément 166 comme dans la deuxième variante du deuxième mode de réalisation. Ladite chaîne comporte néanmoins un élément d'extrémité distale 169 qui est monté directement pivotant sur le sixième élément 166 autour d'un septième axe D7.

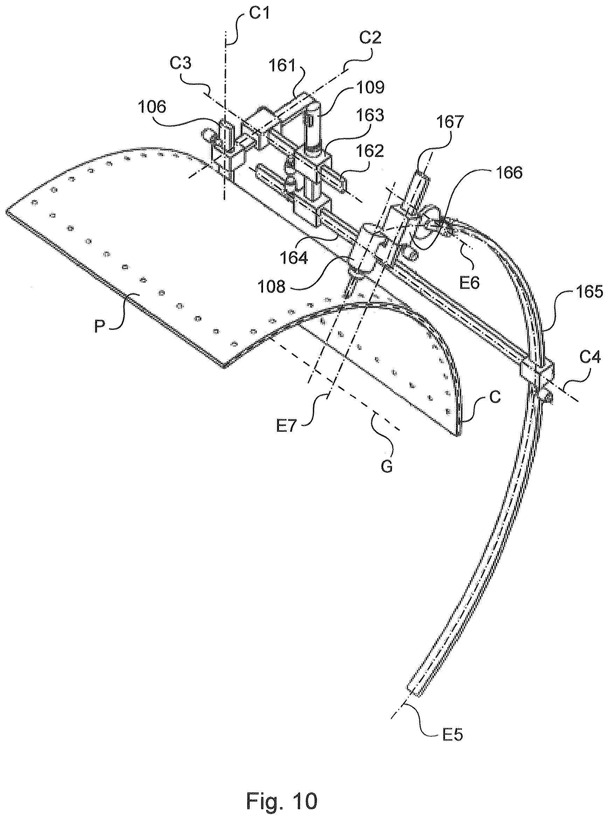

La figure 10 illustre une quatrième variante du deuxième mode de réalisation dans laquelle le robot est configuré plus simplement.

La chaîne principale d'éléments comporte, une base 106, un premier élément 161, un deuxième élément 162, un troisième élément 163 et un quatrième élément 164 semblables à ceux de la deuxième variante du deuxième mode de réalisation. La chaîne d'éléments comporte également un cinquième élément 165, un sixième élément 166, et un élément d'extrémité distale 167 disposés différemment de ceux de la deuxième variante du deuxième mode de réalisation. La chaîne d'éléments comporte ainsi :

- un cinquième élément 165 monté sur le quatrième élément 164 de sorte à être mobile relativement au quatrième élément 164 selon un cinquième axe E5 qui est courbe et sensiblement coaxial à la courbe directrice C de la pièce cylindrique P, le cinquième élément 165 étant conformé en un guide circulaire concentrique audit axe courbe E5,
- un sixième élément 166 monté pivotant sur le cinquième élément 165 autour d'un sixième axe E6, ceci permettant de contrôler l'orientation de l'outil 108 de sorte à maintenir l'outil 108 perpendiculaire à la surface de la pièce cylindrique P dans le cas où le cinquième axe E5 et la courbe directrice C ne seraient pas parfaitement coaxiaux,
- un élément d'extrémité distale 167 monté sur le sixième élément 166 de sorte à être mobile en translation le long d'un septième axe E7 relativement au sixième élément 166.

Dans le cas où la courbe directrice C et le cinquième axe E5 sont parfaitement coaxiaux, les couplages gérés par le contrôleur 113 entre la poignée 109 et l'outil 108 s'avèrent très simples. En effet, le contrôleur 113 peut alors commander les différents organes moteurs du robot de sorte que :

- un mouvement de la poignée 109 le long du troisième axe C3 entraîne un mouvement de l'outil 108 le long de la droite génératrice G selon laquelle la pièce s'étend,
- un mouvement de la poignée 109 le long du premier axe C1 entraîne un mouvement de l'outil 108 autour de la courbe directrice C, le mouvement circulaire de l'outil 108 étant alors plus complexe que le mouvement de translation mono-axial de la poignée 109,
- un mouvement de la poignée 109 le long du deuxième axe C2 entraîne un mouvement de l'outil 108 le long du septième axe E7.

Dans le cas où la courbe directrice C et le cinquième axe E5 ne sont pas parfaitement coaxiaux, le contrôleur 113 est configuré de sorte que le mouvement de l'outil 108 autour du sixième axe E6 soit couplé à d'autres mouvements de l'outil 108 et/ou de la poignée 109 afin de maintenir l'outil 108 perpendiculaire à la surface de la pièce cylindrique P quels que soient les mouvements de l'outil 108 selon le septième axe E7.

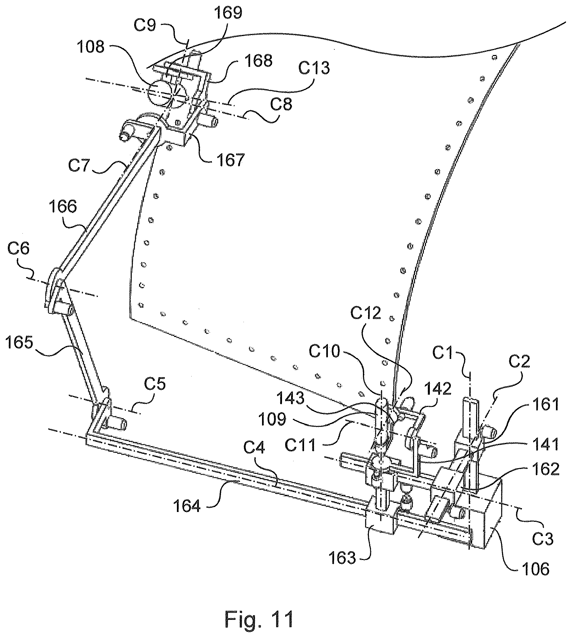

La figure 11 illustre une cinquième variante du deuxième mode de réalisation dans lequel l'outil 108 et la poignée 109 ont chacun six degrés de liberté et peuvent effectuer des mouvements différents relativement à la base 106.

La chaîne principale d'éléments est ici identique à celle illustrée à la figure 8. En revanche, le robot comporte en outre une chaîne secondaire d'éléments à trois degrés de liberté. La chaîne secondaire d'éléments est composée de:

- un premier corps 141 monté pivotant sur le troisième élément autour d'un dixième axe C10,
- un deuxième corps 142 monté pivotant sur le premier corps 141 autour d'un onzième axe C11, et
- un troisième corps 143 monté pivotant sur le deuxième corps 142 autour d'un douzième axe C12.

Il est alors possible d'avoir des couplages implémentés par le contrôleur 113 du côté de l'outil 108 mais aussi du côté de la poignée 109.

Du côté de l'outil 108, le contrôleur 113 peut utiliser les mêmes types de couplages que pour le robot selon la deuxième variante du deuxième mode de réalisation illustrée par la figure 8. Le contrôleur peut ainsi être configuré de sorte que :

- les mouvements de la poignée 109 selon le premier axe C1 et le troisième axe C3 entraînent un mouvement de l'outil 108 sur la surface cylindrique de la pièce P,
- les mouvements de la poignée 109 selon le deuxième axe C2 entraînent un mouvement de l'outil 108 perpendiculairement à la surface cylindrique de la pièce P.

Du côté de la poignée 109, le contrôleur 113 peut par exemple être configuré pour maintenir la poignée 109 toujours verticale.

Il peut encore être configuré de manière à ce que l'orientation de la poignée suive celle de l'outil, et avantageusement que le douzième axe C12 reste parallèle à l'axe C13 de l'outil (c'est-à-dire l'axe selon lequel s'étend la mèche de perçage et autour duquel peut tourner ladite mèche de perçage), l'axe de l'outil C13 pouvant avantageusement être lui-même guidé en fonction de la tâche à accomplir, par exemple sur la base des informations fournies par le système de mesure externe 116. Ainsi, l'ergonomie est renforcée.

L'opérateur pourra avantageusement choisir, à l'aide des boutons de commande 117, entre une utilisation avec une poignée 109 verticale et une utilisation avec une poignée 109 dont l'orientation est pilotée par le contrôleur 113 comme précité. Bien entendu, lors du passage d'une utilisation avec une poignée 109 verticale à une utilisation avec une poignée dont l'orientation est pilotée par le contrôleur 113, les couplages entre l'outil 108 et la poignée 109 sont temporairement inactifs le temps pour le robot d'effectuer une initialisation des formules de couplage. Toutefois, les couplages sont bien actifs en dehors de ces phases d'initialisations que l'on se place dans une utilisation avec une poignée 109 verticale ou que l'on se place dans une utilisation avec une poignée dont l'orientation est pilotée par le contrôleur 113.

Evidemment, ces couplages ne sont donnés qu'à titre d'exemples et toute autre solution pourrait être retenue. Cette capacité à modifier les couplages, à la fois côté poignée et côté outil, en fonction de la tâche à accomplir et de critères ergonomiques, est un caractère avantageux de l'invention.

Bien entendu le deuxième mode de réalisation et ses variantes décrits ne sont pas limitatifs et on peut y apporter des modifications sans sortir du cadre de l'invention tel que définie par les revendications.

Comme on a pu le constater, le robot selon le deuxième mode de réalisation peut prendre différentes configurations et celles illustrées ne sont pas limitatives.

Bien entendu, la poignée pourra avoir toute autre forme que celle illustrée adaptée à une prise en main ergonomique.

De la même façon, l'outil pourrait être de tout type adapté à la tâche à accomplir. Tout comme dans le premier mode de réalisation, l'outil pourra ainsi comporter un préhenseur, comme par exemple une pince motorisée à deux mors, qui pourra agir directement sur l'environnement ou porter un instrument comme une perceuse. On notera également que l'on pourra pour certaines tâches agir sur l'environnement avec un outil passif. On pourra encore agir sur l'environnement directement avec la pince ou la main robotique, c'est dire que la pince ou la main robotique ne portera aucune perceuse ou autre instrument. On pourra enfin dans certains cas agir sur l'environnement directement avec l'élément d'extrémité distale du robot, aucun outil, pince ou autre préhenseur n'étant alors solidarisé à l'élément d'extrémité distale.

Bien entendu on pourra utiliser tout autre type de réducteurs que ceux décrits et, en particulier, des réducteurs à engrenages, épicycloïdaux ou de type Harmonic Drive.

Bien qu'ici le robot ne comporte pas de capteur d'effort multiaxe, le robot pourra comporter de tels capteurs en complément ou en remplacement des moyens de mesure des courants moteurs.

En plus des moyens de commande, le robot selon le deuxième mode de réalisation pourra aussi comporter des moyens de couplage mécanique passifs comme des engrenages, des poulies ou des systèmes de cames qui permettront de remplacer certains couplages contrôlés entre l'outil et la poignée par des couplages mécaniques passifs.

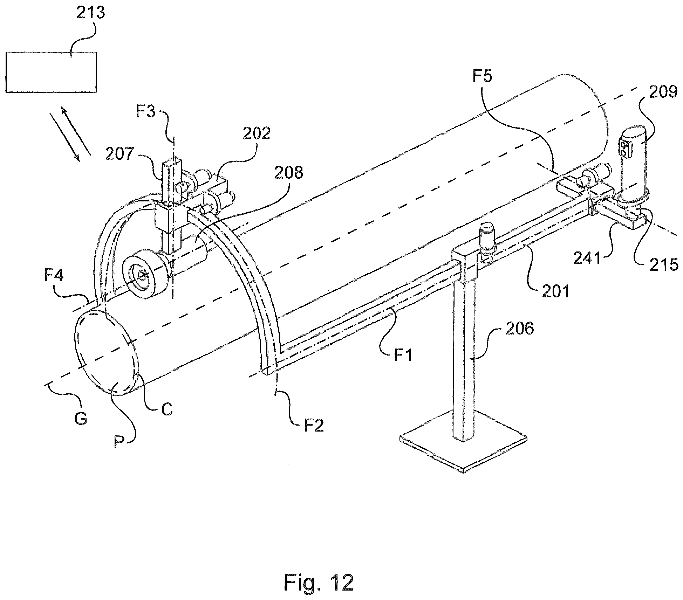

La figure 12 illustre un robot de co-manipulation selon un troisième mode de réalisation de l'invention dans lequel les moyens de commande sont configurés pour coupler de façon contrôlée une partie seulement des mouvements de l'outil 208 avec une partie seulement de ceux de la poignée 209, les mouvements de l'outil 208 étant identiques à ceux de la poignée 209 pour les autres directions. Les éléments en commun avec le premier mode de réalisation conservent leur numérotation augmentée de deux centaines.

Le robot selon le troisième mode de réalisation de l'invention est destiné à assister l'opérateur dans une tâche de brossage d'un objet tel qu'un tuyau P. Le tuyau P est donc défini par une droite génératrice G selon laquelle le tuyau s'étend et par une courbe directrice C circulaire.

La chaîne principale d'éléments du robot est ici constituée de :

- un élément d'extrémité proximale 206 formant une base du robot,
- un premier élément 201 monté sur la base 206 de sorte à être mobile en translation par rapport à la base le long d'un premier axe F1, le premier axe F1 étant ici parallèle à la droite génératrice G,
- un deuxième élément 202 monté sur le premier élément 201 de sorte à être mobile relativement au premier élément 201 selon un deuxième axe F2 qui est courbe et sensiblement coaxial à la courbe directrice C, le premier élément 201 comportant ici une portion conformée en un guide circulaire concentrique audit axe courbe F2 sur laquelle le deuxième élément 202 est monté mobile, et
- un élément d'extrémité distale 207 monté sur le deuxième élément 202 de sorte à être mobile en translation par rapport au deuxième élément 202 le long d'un troisième axe F3.

L'outil 208 comporte ici un corps comprenant un moteur et une brosse entraînée en rotation par ledit moteur autour d'un quatrième axe F4.

Le robot comporte en outre une chaîne secondaire d'éléments composée d'un corps supplémentaire 241 monté sur le premier élément 201 de sorte à être mobile en translation par rapport au premier élément 201 le long d'un cinquième axe F5 ici perpendiculaire et sécant au premier axe F1. La poignée 209 est liée ici audit corps supplémentaire 241 par l'intermédiaire d'un capteur d'efforts multiaxe 215, et a donc les mêmes degrés de liberté que le corps supplémentaire 241. La poignée 209 peut ainsi être déplacée par l'opérateur dans un plan horizontal défini par le premier axe F1 et le cinquième axe F5.

Le robot comporte en outre sur tous ces axes des organes moteurs et des moyens de mesure de déplacements semblables à ceux du robot illustré à la figure 6.

Les mouvements de la poignée 209 selon le premier axe F1 entraînent ici directement des mouvements identiques de l'outil 208 le long dudit premier axe F1, ces mouvements n'étant pas pilotés par le contrôleur 213.

De préférence, le contrôleur 213 est configuré de sorte que sur les autres axes :

- un mouvement de la poignée 209 suivant le cinquième axe F5 entraîne un mouvement de l'outil 208 autour du deuxième axe courbe F2, le mouvement circulaire de l'outil 208 étant alors plus complexe que le mouvement de translation mono-axial de la poignée 209,
- en fonction des efforts appliqués à la poignée 209 par l'opérateur (mesurés par exemple par le capteur d'efforts multiaxe 215 agencé entre la poignée 209 et le corps supplémentaire 241), le contrôleur 213 régule les efforts exercés par l'outil 208 sur le tuyau P. L'effort exercé sur le tuyau P par l'outil 208 est par exemple amplifié relativement à l'effort exercé par l'opérateur sur la poignée 209 suivant un axe perpendiculaire aux axes F1 et F5.

Bien entendu le troisième mode de réalisation décrit n'est pas limitatif et on peut y apporter des variantes sans sortir du cadre de l'invention tel que définie par les revendications.

En particulier, l'effort exercé sur le tuyau P par l'outil 208 pourra être régulé en fonction d'un mouvement de la poignée 209 selon un sixième axe, perpendiculaire au plan horizontal, au lieu d'être régulé en fonction des efforts exercés sur la poignée 209.

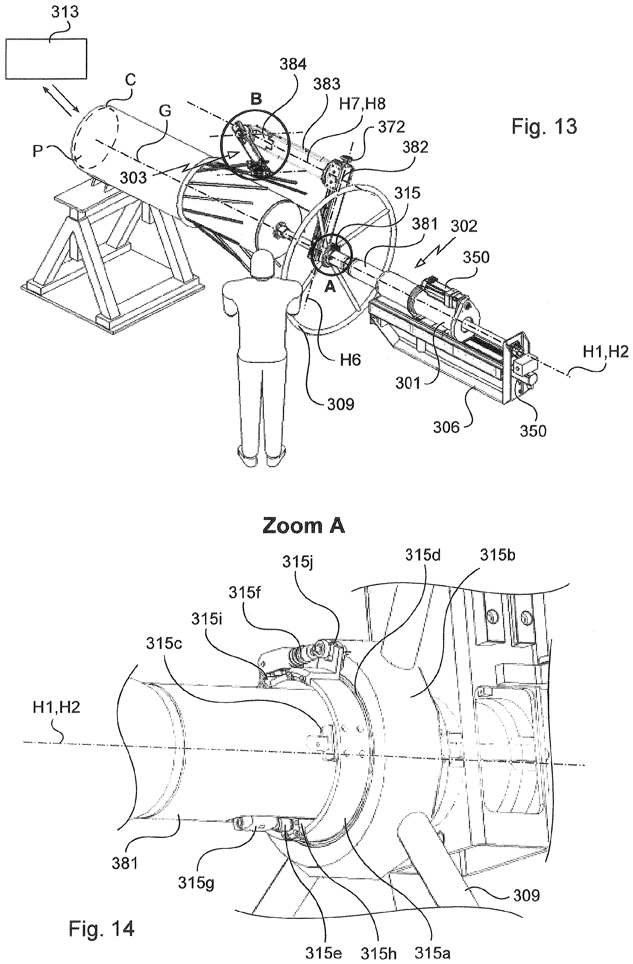

En référence aux figures 13 à 16, un robot selon un quatrième mode de réalisation de l'invention va être à présent décrit. Les éléments en commun avec le premier mode de réalisation conservent leur numérotation augmentée de trois centaines.

Tout comme sur le robot de co-manipulation du troisième mode de réalisation, les mouvements de l'outil du robot de co-manipulation sont identiques à ceux de la poignée sur certains axes et ces mouvements sont couplés sur d'autres axes par l'intermédiaire des moyens de commande.

Le robot selon le quatrième mode de réalisation de l'invention est destiné à assister l'opérateur dans une tâche consistant à dérouler et à plier des fils d'armure initialement enroulés en hélice sur un objet tel qu'un flexible P de forme cylindrique. Le flexible P est donc défini par une droite génératrice G selon laquelle le flexible s'étend et par une courbe directrice C circulaire. La pliure des différents fils a lieu à l'interface entre les fils et la couche externe du flexible P qui comprend également une couche interne, les fils étant disposés entre la couche interne et la couche externe du flexible P.

L'orientation du fil autour de son axe et le glissement selon ce même axe n'étant pas contrôlés lors de cette opération, il suffit de cinq degrés de liberté au niveau de l'outil pour effectuer cette tâche. Comme indiqué ci-dessous, ces mobilités sont assurées ici par cinq éléments 301, 302, 303, 304 et 307 mobiles le long ou autour d'axes H1, H2, H3, H4 et H5. Ce mouvement de pliage des fils se réalise suivant une trajectoire en trois dimensions autour du flexible. Il est nécessaire que l'opérateur maîtrise l'avancement le long de cette trajectoire nominale et puisse s'en écarter en effectuant une rotation autour de la droite génératrice G. Cet avancement et cette rotation définissent les degrés de liberté essentiels au pilotage de cette tâche de pliage. Ces degrés de liberté sont au nombre de deux et l'organe de pilotage du robot doit donc avoir au moins deux degrés de liberté.

Ainsi, la chaîne principale d'éléments du robot est ici constituée de :

- un élément d'extrémité proximale 306 formant une base du robot,
- un premier élément 301 monté sur la base 306 de sorte à être mobile en translation par rapport à la base 306 le long d'un premier axe H1, le premier axe H1 étant ici confondu avec la droite génératrice G,
- un deuxième élément 302 monté pivotant sur le premier élément 301 autour d'un deuxième axe H2, le deuxième axe H2 étant ici confondu avec le premier axe H1,

- un troisième élément 303 monté pivotant sur le deuxième élément 302 autour d'un troisième axe H3,
- un quatrième élément 304 monté pivotant sur le troisième élément 303 autour d'un quatrième axe H4,
- un élément d'extrémité distale 307 monté pivotant sur le quatrième élément 304 autour d'un cinquième axe H5.

La base 306 est fixe en service pendant l'exécution de la tâche précitée. Toutefois, la base 306 est ici agencée de sorte à pouvoir être déplacée en dehors des périodes de service du robot. La base 306 comporte par exemple une partie saillante destinée à s'étendre à l'intérieur du flexible P, la partie saillante étant alors concentrique au flexible P. Une fois que le robot est en place, c'est-à-dire que la partie saillante de la base 306 a été introduite dans le flexible P, ladite partie saillante est solidarisée au flexible P afin d'empêcher toute rotation propre du flexible P autour de la droite génératrice G lorsque les fils sont déroulés et pliés autour du flexible P.

De façon particulière, l'organe de pilotage comporte un volant 309. Le volant 309 est ici lié au deuxième élément 302 par l'intermédiaire d'un organe de mesure d'efforts 315, qui sera détaillé ci-dessous, de sorte à avoir les mêmes degrés de liberté que le deuxième élément 302. Le volant 309 comporte ainsi deux degrés de liberté relativement à la base 306.

L'outil 308 est ici directement lié à l'élément d'extrémité distale 307 du robot de sorte à être solidaire dudit élément d'extrémité.

L'outil 308 comporte ici une pince comprenant un corps 370 et deux mors 371 articulés sur le corps 370. L'outil 308 comporte également une gâche associée à deux solénoïdes 372 permettant la commande de l'ouverture de la pince. La commande de la fermeture de la pince est ici manuelle mais elle pourrait en variante être automatique.

Ainsi, lorsque la pince est ouverte, un fil peut y être inséré par l'opérateur. Une fois fermé, le corps 370 définit avec les deux mors 371 deux orifices cylindriques à l'intérieur desquels le fil s'étend. La pince est ici configurée de sorte que les orifices cylindriques soient de diamètres suffisamment petits pour que le fil frotte contre les parois des orifices cylindriques tout en étant suffisamment importants pour que le fil puisse tourner autour de son axe propre (sensiblement confondu ici avec un axe passant par les centres des deux orifices cylindriques) et puisse glisser le long dudit axe propre.

De préférence, le deuxième élément 302 est constitué d'une pluralité de corps dont les positions relatives les unes par rapport aux autres sont réglables en dehors de la mise en service du robot.

Le deuxième élément 302 comporte ainsi un premier corps 381 qui est monté pivotant sur le premier élément 301 autour du deuxième axe H2.

Le deuxième élément 302 comporte en outre un deuxième corps 382 qui est monté sur le premier corps 381 de sorte à être mobile en translation le long d'un sixième axe H6 par rapport au premier corps 381. Cette translation est passive et sert à adapter la configuration du robot de co-manipulation au type de flexible et au type de fil sur lesquels l'opérateur doit travailler. Le placement relatif du premier corps 381 vis-à-vis du deuxième corps 382 est effectué par l'opérateur à l'aide d'une manivelle 372 agencée sur le deuxième corps 382. Le déplacement du deuxième corps 382 par rapport au premier corps 381 selon le sixième axe H6 est par exemple mesuré par un capteur. Une fois la configuration du robot souhaitée atteinte (position correspondant au flexible P et aux fils sur lesquels on travaille et qui est définie par exemple par un abaque) le premier corps 381 et le deuxième corps 382 sont solidarisés par exemple ici à l'aide de vis.

Le deuxième élément 302 comporte un troisième corps 383 qui est monté pivotant sur le deuxième corps 382 autour d'un septième axe H7 par rapport au deuxième corps 382. Là encore, cette rotation est passive et le placement relatif du deuxième corps 382 et du troisième corps 383 est réalisé à la main avant la mise en service du robot, le troisième corps 383 et le deuxième corps 382 étant ensuite solidarisés l'un à l'autre.

Le deuxième élément 302 comporte en outre un quatrième corps 384 qui est monté sur le troisième corps 383 de sorte à être mobile en translation par rapport au troisième corps 383 le long d'un huitième axe H8, le huitième axe H8 étant confondu ici avec le septième axe H7. Là encore, ce mouvement est passif et le placement relatif du quatrième corps 384 et du troisième corps 383 est réalisé à la main avant la mise en service du robot, le troisième corps 383 et le quatrième corps 384 étant ensuite solidarisés l'un à l'autre.

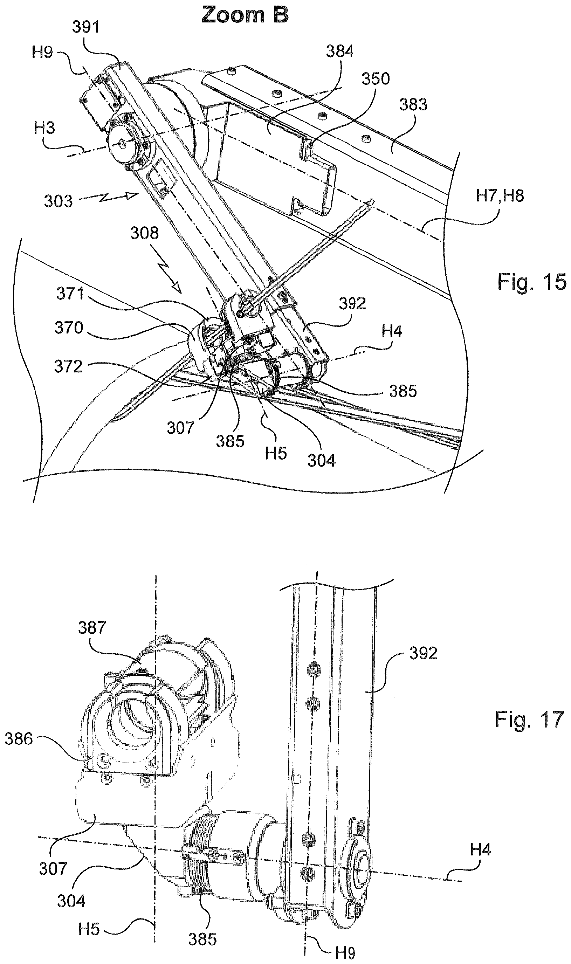

De préférence, le troisième élément 303 est également constitué d'une pluralité de corps dont les positions relatives les unes par rapport aux autres sont réglables en dehors de la mise en service du robot (comme plus visible à la figure 15).

Le troisième élément 303 comporte un premier corps 391 qui est pivotant sur le quatrième corps 384 du deuxième élément 302 autour du troisième axe H3.

Le troisième élément 303 comporte en outre un deuxième corps 392 qui est monté sur le premier corps 391 du troisième élément 303 de sorte à être mobile en translation le long d'un neuvième axe H9 par rapport au premier corps 391 du troisième élément 303. Là encore, cette translation est passive et le placement relatif du premier corps 391 et du deuxième corps 392 est réalisé à la main avant la mise en service du robot, le premier corps 391 et le deuxième corps 392 étant ensuite solidarisés l'un à l'autre.

Les moyens de commande comportent des moteurs 350 pour motoriser les mouvements du premier élément 301 relativement à la base 306, du deuxième élément 302 relativement au premier élément 301 et du troisième élément 303 relativement au deuxième élément 302.

En revanche, aucun moteur n'est associé au quatrième élément 304 et à l'élément d'extrémité distale 307 pour motoriser respectivement le mouvement du quatrième élément 304 relativement au troisième élément 303 et le mouvement de l'élément d'extrémité distale 307 relativement au quatrième élément 304. Les liaisons entre le quatrième élément 304 et le troisième élément 303 et entre le quatrième élément 304 et l'élément d'extrémité distale 307 sont donc non contrôlées par le contrôleur 313. La chaîne d'élément principale comporte ici des moyens de rappel mécanique comprenant ici des ressorts 385, associés respectivement à chacune des deux articulations précitées, et qui sont introduits pour maintenir l'élément d'extrémité distale 307 et le quatrième élément 304 dans des positions neutres en l'absence de sollicitations extérieures.

Les moyens de mesure de déplacements comportent ici des capteurs de position (non représentés ici) associés à chacun des moteurs 350 précités.

Les moyens de mesure d'efforts comportent en outre l'organe de mesure d'efforts 315 pour mesurer les efforts exercés sur le volant par l'opérateur, le volant 309 étant lié au deuxième élément 302 par l'intermédiaire dudit organe de mesure d'effort.

Ici la base 306, le premier élément 301 et le premier corps 381 du deuxième élément 302 forment une partie de la chaîne principale d'éléments dite « partie amont » car située en amont du volant 309 tandis que le deuxième corps 382, le troisième corps 383 et le quatrième corps 384 du deuxième élément 302, le troisième élément 303, le quatrième élément 304 et l'élément d'extrémité distale 307 forment une partie de la chaîne principale d'éléments dite « partie avale» car située en aval du volant 309.

Comme plus visible à la figure 14, l'organe de mesure d'efforts 315 comporte ici une première portion 315a montée sur le corps 381 du deuxième élément 302 de sorte à être mobile en translation le long du premier axe H1 par rapport au deuxième élément 302 et une deuxième portion 315b montée pivotante sur la première portion 315a autour du premier axe H1. Les mouvements de translation de très faible amplitude entre le premier corps 381 du deuxième élément 302 et la première portion 315a sont assurés grâce à des patins à billes linéaires 315c (dont un seul est visible sur la figure 14) et les mouvements de rotation de très faible amplitude entre la première portion 315a et la deuxième portion 315b sont assurés grâce à des roulements à billes minces 315d. Le volant 309 est solidaire de la deuxième portion 315b.

L'organe de mesure d'effort 315 comporte en outre un premier capteur d'effort 315e mono-axe inséré entre le premier corps 381 du deuxième élément 302 et la première portion 315a, et un deuxième capteur d'effort 315f mono-axe inséré entre la première portion 315a et la deuxième portion 315b. Le premier capteur 315e est fixé au premier corps 381 du deuxième élément 302 grâce à une première pièce d'attache 315g solidaire du premier corps 381 du deuxième élément 302 et à la première portion 315a grâce à une deuxième pièce d'attache 315h solidaire de la première portion 315a. Le deuxième capteur 315f est fixé à la première portion 315a grâce à une troisième pièce d'attache 315i solidaire de la première portion 315a et à la deuxième portion 315b grâce à une quatrième pièce d'attache 315j solidaire de la deuxième portion 315b. Ces deux capteurs d'effort mono-axes permettent de mesurer les efforts appliqués sur le volant 309 le long et autour du premier axe H1 et du deuxième axe H2.

L'organe de mesure d'efforts 315 est avantageusement moins coûteux qu'un capteur d'efforts multiaxe.

De façon particulière, les moyens de commande ne comportent pas de moyens de mesure d'efforts agencés au niveau de l'outil 308 pour mesurer les efforts exercés par les fils d'armure du flexible P sur l'outil 308. En effet, la régulation de l'effort appliqué aux fils d'armure du flexible P n'est pas aussi importante que pour les tâches de ponçage à effectuer par le robot selon le premier mode de réalisation ou de perçage à effectuer par le robot selon le deuxième mode de réalisation de l'invention.

De préférence, le contrôleur 313 est configuré de sorte que :

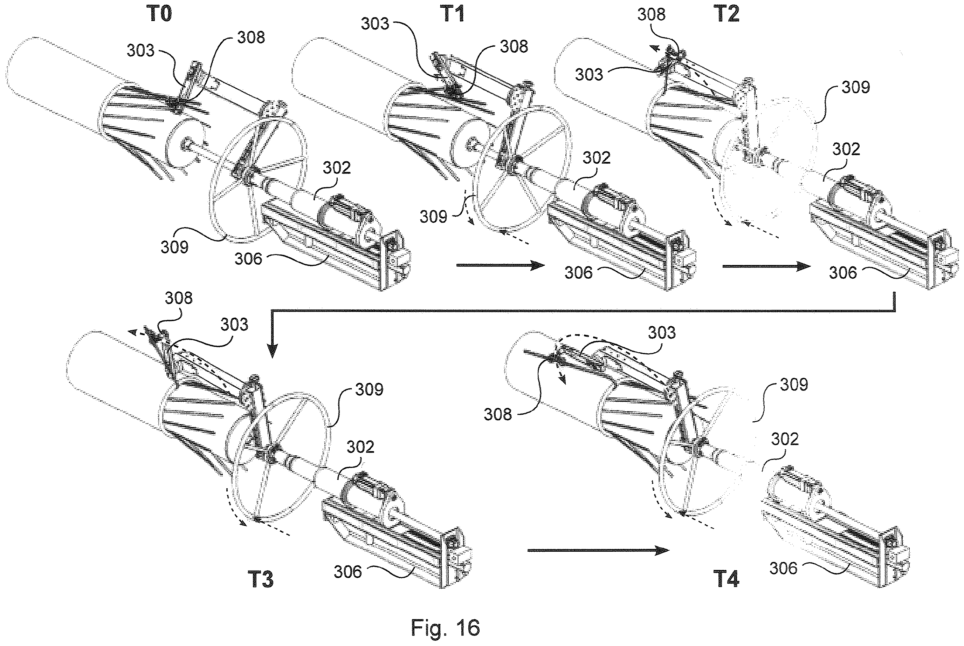

- les mouvements du volant 309 suivant le premier axe H1 et autour du deuxième axe H2 entraînent un mouvement combiné plus complexe de l'outil 308 défini autour de la droite génératrice G, obtenu par combinaison des mouvements du premier élément 301, du deuxième élément 302, du troisième élément 303, du quatrième élément 304 et de l'élément d'extrémité distale 307 le long ou autour des axes H1 à H5, le mouvement de l'outil 308 étant bien plus complexe que ceux du volant 309 (comme plus visible à la figure 16),
- en fonction des efforts appliqués au volant 309 par l'opérateur, le contrôleur 313 amplifie les efforts exercés par l'outil 308 sur les fils d'armure du flexible P.

Les mouvements de l'outil 308 autour des axes H1 à H3 sont couplés aux mouvements du volant 309 suivant le premier axe H1 et autour du deuxième axe H2. Les mouvements de l'outil 308 autour des axes H4 et H5 sont quant à eux pilotés de façon passive par l'environnement du robot, à savoir ici par les fils d'armures, et par les ressorts 385. En l'absence de fil dans l'outil 308, la position du quatrième élément 304 et du septième élément 307 et de l'outil 308 est imposée par les ressorts 385. La raideur des ressort 385 est avantageusement choisie de telle sorte que l'effort de rappel de ces ressorts 385 soit négligeable devant la force de réaction des fils sur l'outil 308 mais suffisante pour contrer les efforts de gravité au niveau des articulations entre ces éléments et l'outil 308.

Le fonctionnement du robot selon le quatrième mode de réalisation de l'invention va être à présent décrit en référence à la figure 16.

A l'instant T0, la base 306 est installée et est fixée, les différents corps du deuxième élément 302 sont fixés les uns aux autres et les différents corps du troisième élément 303 sont fixés les uns aux autres.

L'opérateur commence alors par insérer un fil dans la pince qu'il referme. Puis l'opérateur tourne et avance le volant 309.

Au fur et à mesure, grâce au couplage par le contrôleur 313 entre le volant 309 et l'outil 308, l'outil 308 suit une trajectoire qui vient plier le fil (un peu à l'instant T1, un peu plus à l'instant T2, d'avantage à l'instant T3) de sorte qu'à l'instant T4 le fil soit complètement plié.

L'opérateur ouvre alors la pince et effectue les gestes inverses à ceux réalisés lors du pliage du fil. Le robot revient alors à sa position initiale tandis que le fil qui a été déformé de façon plastique demeure plié sur le flexible P.

L'opérateur tourne alors légèrement le volant 309 et recommence l'opération de pliage avec un autre fil du flexible.

L'utilisation d'une pince telle que décrite précédemment est avantageuse car ladite pince permet de modifier la position relative entre la pince et le fil au cours de la tâche. Ainsi, le fil est inséré dans la pince au niveau de l'extrémité du fil mais la pince va se rapprocher naturellement de l'autre extrémité du fil de manière à participer au pliage du fil au niveau de l'interface entre le fil et le flexible P afin que l'on ait une déformation plastique du fil au niveau de cette interface, déformation plastique qui va permettre que le fil demeure plié sur le flexible P même lorsque ledit fil n'est plus enserré par la pince.

Il arrive que les fils ne se déforment pas de façon plastique sur toute leur longueur comprise entre l'interface et leur extrémité insérée dans l'outil 308. La déformation des fils étant élastique sur une partie de cette longueur, les fils opposent alors une force élastique non-négligeable en fin de pliage. Dans ce cas, avant de libérer les fils de la pince, il est préférable de maintenir les fils en position plié sur le flexible P, par exemple par une couronne munie de crochets ou par enroulement d'une bande adhésive autour de chaque fil.

Le robot de co-manipulation du quatrième mode de réalisation selon l'invention permet d'assister l'opérateur dans sa tâche consistant à plier les différents fils autour du flexible P.

Traditionnellement, cette tâche était effectuée manuellement par l'opérateur. L'opérateur devait saisir l'extrémité du fil et le ramener le long du flexible P. Ceci requérait que l'opérateur effectue des gestes de grande amplitude et applique des efforts importants, ce qui était fatiguant et constituait des gestes reconnus comme ayant une mauvaise ergonomie et pouvant provoquer à terme des troubles musculo-squelettiques.

Le robot de co-manipulation selon le quatrième mode de réalisation permet de faciliter la tâche précitée pour l'opérateur qui reste cependant le seul à contrôler l'outil, l'outil n'étant pas déplacé tant que l'opérateur ne déplace pas la poignée.

Grâce aux couplages entre les mouvements du volant 309 et de l'outil 308, pour chacun des fils du flexible P, l'opérateur effectue des mouvements simples et de faibles amplitudes de translation et de rotation alors que l'outil 308 exécute une trajectoire complexe, sensiblement hélicoïdale, de plus grande amplitude autour du flexible. En outre, toujours grâce à ces couplages, pour chacun des fils du flexible P, les efforts appliqués par l'outil 308 sur le fil peuvent avantageusement être bien supérieurs à ceux appliqués sur le volant 309 par l'opérateur. Les efforts appliqués sur le volant 309 par l'opérateur sont alors nettement inférieurs à l'effort nécessaire pour plier les fils.

En outre l'opérateur est éloigné de la pince lorsque les fils sont pliés par le robot. Si lesdits fils venaient à se libérer de l'outil au cours de l'étape de pliage, l'opérateur ne pourrait pas être blessé par eux lors du brusque retour élastique desdits fils. L'opérateur est donc plus en sécurité que lorsque la tâche était effectuée manuellement.

Bien entendu le quatrième mode de réalisation décrit n'est pas limitatif et on peut y apporter des variantes sans sortir du cadre de l'invention tel que définie par les revendications.

Ainsi, la chaîne principale d'éléments pourra comporter deux parties avales identiques portant chacune un outil de sorte que les deux outils soient disposés à 180 degrés l'un de l'autre. De la sorte, il sera possible de plier simultanément deux fils du flexible P, lesdits fils étant disposés symétriquement autour du flexible P. Ce principe peut être généralisé à trois ou quatre fils ou davantage.

Le robot pourra encore comporter des mobilités supplémentaires. En particulier, le robot pourra être configuré de sorte que le deuxième corps 382 soit monté pivotant sur le premier corps 381 du deuxième élément de sorte que les corps 382, 383 et 384 du deuxième élément 302 soient mobiles en rotation relativement au premier corps 381 du deuxième élément 302 autour d'un axe de rotation parallèle et avantageusement confondu avec le premier axe H1. Ce degré de liberté supplémentaire pourra être motorisé et utilisé pour amplifier le mouvement de rotation de la partie avale de la chaîne principale d'éléments du robot autour du premier axe H1. Ce degré de liberté sera particulièrement intéressant pour plier des fils ayant un grand angle d'hélice. En effet, ces fils peuvent être enroulés sur plusieurs tours et l'ajout dudit degré de liberté permettra à l'opérateur de ne tourner le volant 309 que d'une fraction de tour quel que soit le nombre de tours que le fil devrait faire autour du flexible P moyennant une amplification adaptée de cette rotation à l'aide des moyens de commande.

En outre, les liaisons entre les différents corps du deuxième élément 302 et du troisième élément 303 pourront ne pas être passives mais être motorisées de sorte à pouvoir être gérées par le contrôleur 313. Ceci permettra un couplage plus complexe entre le volant 309 et l'outil 308.

L'amplification du déplacement de l'outil relativement au flexible P par rapport à l'avancement du volant 309 le long du premier axe H1 ne sera pas forcément constante. Elle pourra ainsi être non linéaire de sorte que la pince avance régulièrement au fur et à mesure que le volant 309 est poussé par l'opérateur.

On note qu'il pourra aussi être intéressant de pouvoir tourner librement le robot autour de la droite génératrice G à certains moments, en particulier au début de la tâche pour aligner l'outil avec le fil que l'on cherche à plier et à la fin de la tâche pour ajuster la position radiale de l'extrémité du fil plié par exemple pour qu'elle ne frotte pas sur les fils adjacents déjà pliés ou pour venir engager le fil dans un organe de maintien sur le flexible P comme dans un crochet d'une couronne de maintien comme évoquée ci-dessus. Cela peut être obtenu en bloquant le mouvement du premier élément 301 le long du premier axe H1 à l'aide du premier moteur 350 (associé à la liaison entre le premier élément 301 et la base 306), le volant 309 ne pouvant alors plus être mû qu'en rotation autour du deuxième axe H2. Cette rotation peut être assistée par le deuxième moteur 350 (associé à la liaison entre le premier élément 301 et le deuxième élément 302) pour limiter les efforts de l'opérateur sur le volant 309. Le volant sera alors avantageusement pourvu de boutons de commande pour pouvoir basculer d'un mode d'assistance à un autre.

Bien entendu tout autre type d'outil que celui illustré pourra être utilisé comme par exemple une pince classique venant immobiliser le fil ou encore un préhenseur dextre. La figure 17 illustre ainsi une variante de l'outil illustré aux figures 13 à 16. Dans cette variante, l'outil 308 ne comporte qu'un unique mors 387 qui, lorsqu'il est refermé, forme avec le corps 386 de l'outil 308 un unique guide cylindrique. Un tel outil 308 ne nécessite qu'un seul solénoïde pour commander son ouverture, ce qui simplifie sa conception.

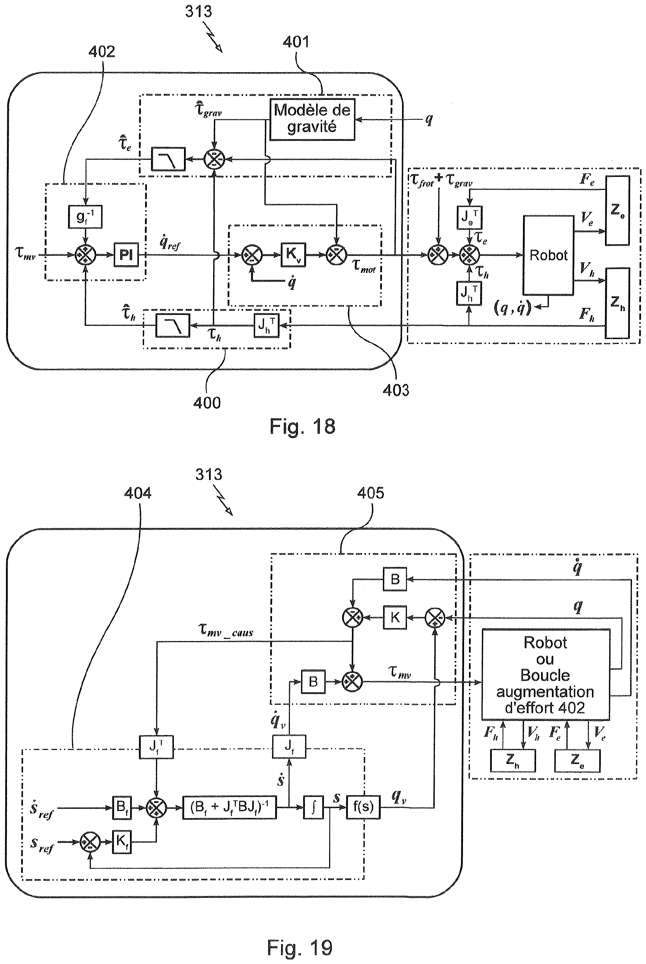

En référence aux figures 18 et 19, un exemple de contrôleur pouvant être associé à n'importe quel mode de réalisation ou n'importe quelle variante décrits précédemment va être à présent décrit. D'une manière générale, le contrôleur de l'invention a pour rôle de réguler la commande des organes moteurs suivant une stratégie prédéfinie et en fonction des signaux transmis par les moyens de mesure d'efforts et/ou de déplacements et éventuellement d'un système de mesure externe. De préférence, le contrôleur de l'invention a pour rôle de mettre en place des couplages entre les différents organes moteurs pour permettre la coordination des différents axes des chaînes principales et secondaires d'éléments afin d'assurer l'exécution correcte de la tâche à accomplir tout en simplifiant les gestes de l'opérateur et en lui procurant, éventuellement, un retour d'effort. Le contrôleur peut aussi être utilisé pour implémenter des fonctions de guidage des gestes de l'opérateur et d'assistance en effort.

Si on se place dans le cas du robot selon le quatrième mode de réalisation illustré aux figures 13 à 16, le rôle du contrôleur 313 est de coordonner les mouvements des différents éléments de la chaîne principale d'éléments selon le premier axe H1, le deuxième axe H2 et le troisième axe H3, qui sont les trois axes motorisés du robot, en fonction des mouvements du robot et des efforts appliqués au volant 309 par l'opérateur afin de plier correctement les fils, de fournir les efforts nécessaires au pliage de ces fils en amplifiant les efforts de l'opérateur et de guider, sur la portion de trajectoire qui impose la déformation plastique du fil, les mouvements de l'opérateur pour assurer la qualité et la répétabilité du geste de pliage.

De façon particulière, en référence à la figure 18, le contrôleur 313 peut exécuter le programme de commande suivant qui permet une amplification des efforts appliqués au volant 309 par l'opérateur.

Le robot selon le quatrième mode de réalisation est en contact avec son environnement via deux ports d'interaction, le premier au niveau du volant 309 avec l'opérateur et le second au niveau de l'outil 308 avec le fil. Ainsi, tout déplacement $V_h$ du volant génère en retour un effort $F_h$ de réaction de l'opérateur, le comportement dudit opérateur étant assimilé à son impédance mécanique $Z_h$, l'opérateur pouvant également appliquer volontairement un effort supplémentaire sur le volant 309. De la même façon tout déplacement $V_e$ de l'outil 308 génère en retour un effort $F_e$ de réaction du fil d'armure sur l'outil 308, effort de réaction qui est fonction de l'impédance mécanique $Z_e$ dudit fil. Cette impédance, tout comme celle de l'opérateur $Z_h$, est a priori passive. L'effort $F_h$ appliqué par l'opérateur sur le volant 309 est projeté sur chaque liaison mécanique actionnée de la chaîne principale d'éléments sous la forme d'un vecteur de couples $\tau_h$. Pour cela, il suffit de multiplier le torseur $F_h$ par $J_h^T$, la matrice jacobienne transposée du robot, tous deux exprimés au niveau du volant 309. De façon similaire, l'effort $F_e$ appliqué par le fil d'armure du flexible P sur l'outil 308 est projeté sur chaque liaison mécanique actionnée de la chaîne principale d'éléments sous la forme d'un vecteur de couples $\tau_e$. Pour cela on utilise $J_e^T$, la matrice jacobienne transposée du robot exprimée au niveau de l'outil 308. Les articulations du robot de co-manipulation sont soumises à ces efforts mais également au vecteur de couples $\tau_{mot}$ des différents moteurs 350, aux frottements $\tau_{frot}$ et aux couples gravitaires $\tau_{grav}$ générés au niveau des différentes liaisons mécaniques de la chaîne principale d'éléments. Ces efforts, couples, frottements et couples gravitaires s'additionnent et conditionnent l'évolution de la configuration du robot.

L'assistance en effort est obtenue grâce à une boucle d'augmentation des efforts implémentée dans le contrôleur 313. Ladite boucle est ici avantageusement configurée de sorte à permettre de se dispenser d'une mesure directe de l'effort au niveau de l'outil 308.

Ladite boucle comporte ici :

- un estimateur 400 des couples articulaires de l'effort $F_h$ appliqué par l'opérateur sur le volant 309, encore appelé effort opérateur,
- un estimateur 401 des couples articulaires de l'effort $F_e$ appliqué par le fil d'armure du flexible P sur l'outil 308, encore appelé effort effecteur,
- un correcteur d'augmentation d'effort 402, et
- une boucle de vitesse interne 403.

L'estimateur 400 des couples articulaires de l'effort opérateur a pour entrée l'effort opérateur $F_h$ (ou à minima ses composantes utiles mesurées) qu'il multiplie par la matrice $J_h^T$ pour obtenir $\tau_h$. Il applique au résultat obtenu un filtre passe-bas pour obtenir $\hat{\tau}_h$, l'estimée de $\tau_h$.

L'estimateur 401 des couples articulaires de l'effort effecteur calcule d'abord, à partir des mesures de positions q (c'est-à-dire les positions mesurées q des différents éléments de la chaîne principale d'éléments), grâce à un modèle de gravité, l'estimée $\hat{\tau}_{grav}$ des couples gravitaires. Puis l'estimateur 401 additionne $\hat{\tau}_{grav}$ et $\tau_h$ au vecteur de couples des moteurs $\tau_{mot}$ avant d'appliquer un filtre passe-bas au résultat de l'addition, filtre passe-bas qu'on choisira avantageusement identique à celui utilisé dans l'estimateur 400. Enfin l'estimateur 401 inverse le signe pour obtenir $\hat{\tau}_e$, l'estimée de $\tau_e$.

Au sein du correcteur d'augmentation d'effort 402, $\hat{\tau}_e$ est divisé par le gain d'augmentation d'effort $g_f$ souhaité avant d'être additionné à $\hat{\tau}_h$ et $\tau_{mv}$ qui est le couple articulaire d'un mécanisme virtuel de couplage dont on décrira le fonctionnement plus loin. Le résultat de cette addition constitue l'entrée d'un correcteur proportionnel intégral PI qui génère alors des vitesses de consigne $\dot{q}_{ref}$ des différents éléments de la chaîne principale d'éléments.

Une boucle de vitesse interne 403, de type proportionnelle, est également implémentée dans le contrôleur 313. Ladite boucle de vitesse 403 a pour entrées les vitesses réelles $\dot{q}$ des différents éléments de la chaîne principale d'éléments, calculées par exemple à partir des signaux générés par les capteurs de position, et les vitesses de consigne

$\overset{\bullet}{q}_{ref}$. Les vitesses réelles $\dot{q}$ sont soustraites aux vitesses de consigne $\overset{\bullet}{q}_{ref}$ et le résultat est alors multiplié par un gain proportionnel $K_v$ pour fournir, après soustraction de $\hat{\tau}_{grav}$, les couples moteurs précités $\tau_{mot}$.

Les couples moteurs de consigne $\tau_{mot}$ sont additionnés aux couples de frottements $\tau_{frot}$ et aux couples gravitaires $\tau_{grav}$, puis aux couples $\tau_h$ et $\tau_e$ décrits précédemment, ce qui permet d'en déduire les couples totaux qui s'appliquent sur le robot et conditionnent son évolution.

En particulier, dans l'état d'équilibre du programme de commande décrit, la relation suivante est respectée : la somme des couples moteurs $\tau_{mot}$, des couples de frottements $\tau_{frot}$, de couples gravitaires $\tau_{grav}$ et des couples $\tau_h$ et $\tau_e$ est égale à zéro soit :

$$\tau_{mot} \; + \; \tau_{frot} \; + \; \tau_{grav} \; + \; \tau_e \; + \; \tau_h \; = \; 0 \quad (1)$$

Par ailleurs à l'équilibre, l'entrée du correcteur proportionnel intégral PI de la boucle d'effort 402 est nulle soit :

$$\hat{\tau}_e \; \times \; g_f^{-1} \; + \; \hat{\tau}_h \; + \; \tau_{mv} \; = \; 0 \quad (2)$$

En supposant qu'à l'équilibre les estimations sont idéales :

$$\hat{\tau}_e \; = \; -\tau_{mot} \; - \; \tau_{grav} \; - \; \tau_h \quad (3)$$

$$\hat{\tau}_h \; = \; \tau_h \quad (4)$$

En combinant les quatre relations précitées, à l'équilibre, la relation globale suivante est respectée :

$$(\tau_{h \; + \; \tau_{mv})} \; \times \; g_f \; + \; \tau_{frot} \; + \; \tau_e = \; 0.$$

La relation globale signifie qu'à l'équilibre et en l'absence de couplage avec un mécanisme virtuel ($\tau_{mv}$ = 0), l'effort appliqué par le fil d'armure sur le robot au niveau de l'outil 308 est, à un signe près, celui appliqué par l'opérateur sur le volant 309 amplifié par un gain $g_f$ auquel s'ajoutent les frottements des différentes liaisons mécaniques.

La boucle de vitesse 403 qui reçoit la consigne de la boucle d'effort 402 est avantageusement implémentée au plus bas niveau du programme de commande décrit avec un temps de cycle minimum et un gain maximum, ce qui permet de linéariser au mieux le comportement du robot et d'améliorer ainsi sa stabilité. Cette boucle de vitesse pourra être avantageusement mise en oeuvre par des variateurs du commerce puisque de tels variateurs proposent en général cette fonctionnalité.

On note que si on choisit un gain $g_f$ supérieur ou égal à 1, il est possible de régler le correcteur proportionnel intégral PI de telle sorte que le robot respecte le critère de stabilité inconditionnelle en mode couplé indépendamment du choix du gain $g_f$. Ledit robot ainsi asservi respecte ce critère notamment si le volant 309 présente un comportement passif (c'est-à-dire qu'il ne restitue pas à l'opérateur plus d'énergie qu'il n'en reçoit) quel que soit l'objet passif avec lequel l'outil 308 interagit et inversement. On note toutefois que, même lorsque ce critère est respecté, la stabilité du robot n'est garantie que tant qu'il n'y a pas d'interaction directe de l'opérateur simultanément sur le volant 309 et le reste du robot (notamment sur l'outil 308). Par conséquent, pendant la phase d'insertion manuelle du fil dans la pince, il peut s'avérer nécessaire, pour garantir la sécurité de l'opérateur, que le programme de commande soit inhibé. Ceci peut être commandé par exemple via un bouton de commande disposé sur le volant 309 ou sur la chaîne d'éléments principale du robot ou via une commande automatique basée sur les informations fournies par un système de mesure externe comme le système de mesure externe illustré à la figure 6.

De façon particulière, en référence à la figure 19, le contrôleur peut exécuter le programme de commande suivant qui permet de faire en sorte que le robot suive une trajectoire complexe définie par un guide virtuel dans l'espace à partir d'un mouvement plus simple de l'opérateur au niveau du volant 309.

Le principe de fonctionnement de ce programme de commande est le suivant.

Si l'on désigne par p le nombre de degrés de liberté d'un mécanisme virtuel simulé 404 qui est implémenté dans le contrôleur 313 et qui permet de simuler les mouvements que l'on désire faire suivre à la chaîne principale d'éléments et n le nombre de degrés de liberté réels motorisés du robot (trois dans le cas du quatrième mode de réalisation), la coordination entre les liaisons mécaniques de l'outil 308 et ceux du volant 309 est décrite par l'application mathématique suivante :

$$f : \mathbb{R}^p \to \mathbb{R}^n$$

qui associe à la position

$$s \in \mathbb{R}^p$$

du mécanisme virtuel, exprimée dans son propre espace articulaire, la position de consigne

$$q_v \in \mathbb{R}^n$$

de la chaîne principale d'éléments, exprimée dans l'espace articulaire du robot.

Il est en particulier possible de définir certains degrés de liberté du mécanisme virtuel articulaire par des trajectoires :

$$f(s) = \sum_{i=1}^{p} f_i(s_i) \text{ avec } f_i : \mathbb{R} \to \mathbb{R}^n$$

les trajectoires $f_i$ peuvent par exemple être définies par des polynômes d'interpolation ou des splines. Dans ce cas les points d'interpolation sont par exemple déterminés lors d'une manipulation du robot dans un mode de configuration qui permette de déplacer librement ses articulations commandées. Ce mode de configuration peut par exemple être mis en oeuvre par une commande de compensation de gravité bien connue de l'art antérieur et qui ne sera pas détaillée ici.

Pour le robot selon le quatrième mode de réalisation, il est par exemple possible de définir f comme suit :

$$f(s) = f_1(s_1) + [0 ; s_2 ; 0]$$

la trajectoire $f_1$ étant la trajectoire nominale générée par une fonction spline monotonique passant par quatre points déterminés lors d'une manipulation du robot : le premier point en position de prise d'un fil d'armure, le deuxième point en une position intermédiaire permettant de dégager ledit fil des autres fils d'armure, le troisième point en position de passage dudit fil au-dessus du point de pliage dudit fil et le quatrième point en position de fin de pliage dudit fil au contact de la surface du flexible P. Ainsi le degré de liberté $s_1$ représente l'avancement de l'outil 308 le long de la trajectoire nominale et le degré de liberté $s_2$ autorise le décalage de cette trajectoire selon une rotation autour de la droite génératrice G du flexible P aligné ici avec le deuxième axe H2.

Pour suivre la trajectoire définie par le mécanisme virtuel simulé 404, les positions articulaires réelles q des différents éléments de la chaîne principale d'éléments ainsi que les vitesses articulaires réelles $\dot{q}$ sont asservies sur les positions articulaires de consigne et les vitesses articulaires de consigne $q_v$ et $\dot{q}_v$, les vitesses articulaires de consigne $\dot{q}_v$ étant obtenues en multipliant les vitesses $\dot{s}$ du mécanisme virtuel exprimées dans son propre espace articulaire par la matrice jacobienne

$$J_f \in \mathbb{R}^p$$

$$\times \mathbb{R}^n$$

de l'application f pour la position actuelle du mécanisme virtuel s. Cet asservissement est effectué ici à l'aide d'un correcteur de type proportionnel dérivé PD, assimilable à un système de type ressort / amortisseur fictif de raideur K et de viscosité B (K et B étant des matrices diagonales assimilable aux raideurs et viscosités articulaires dudit système fictif). A cet effet, un couplage 405, implémenté dans le contrôleur 313, utilise en entrée : les positions articulaires de consigne $q_v$, les vitesses articulaires de consigne $\dot{q}_v$, les positions articulaires réelles q et les vitesses articulaires réelles

$\dot{q}$. Le couplage 405 fournit notamment en sortie le vecteur des couples articulaires de couplage au mécanisme virtuel $\tau_{mv}$ qu'il convient d'appliquer en entrée de la boucle d'augmentation d'effort 402 décrite précédemment (ou qu'il convient d'appliquer directement au vecteur de couples moteurs $\tau_{mot}$ des différents moteurs 350, en y ajoutant les couples de frottements $\tau_{frot}$ et les couples gravitaires $\tau_{grav}$, si la fonctionnalité d'augmentation d'effort n'est pas requise) pour suivre les mouvements imposés par le mécanisme virtuel, l'avancement le long de ce mécanisme étant contrôlé par les gestes de l'opérateur sur le volant 309. Les mouvements du robot sont régis par ces couples moteurs et par Fh et Fe.

Plus précisément, au sein du couplage 405, le calcul des couples articulaires de couplage au mécanisme virtuel $\tau_{mv}$ est obtenu par le calcul suivant :

$$\tau_{mv} = K \times (q_v - q) + B \times (\dot{q}_v - \dot{q}) \qquad \text{(équation 1)}$$

On note qu'afin de faire évoluer le mécanisme virtuel en même temps que le robot, la partie causale de l'effort de couplage $\tau_{mv\_caus}$, est aussi calculée au sein du couplage 405 à l'aide de l'équation suivante :

$$\tau_{mv\_causal} = K \times (q_v - q) - B \times \dot{q} \qquad \text{(équation 2)}$$

Le mécanisme virtuel simulé 404 possède une inertie nulle et est soumis à une force de rappel viscoélastique vers des coordonnées de référence $s_{ref}$. L'équilibre des forces exercées s'écrit alors :

$$0 = J_f^T \times \tau_{mv} + K_f \times (s - s_{ref}) + B_f \times (\dot{s} - \dot{s}_{ref}) \text{ (équation 3)}$$

$J_f^T \times \tau_{mv}$ correspond à la force de couplage du mécanisme virtuel projetée sur son espace articulaire propre ;
$K_f$ et $B_f$ sont les matrices diagonales assimilables aux raideurs et viscosités de rappel du mécanisme virtuel vers sa position de référence $s_{ref}$ ;
$\dot{s}_{ref}$ représente la dérivée temporelle de $s_{ref}$.

Plus précisément, au sein du couplage 405, le calcul de l'évolution de l'état du mécanisme virtuel, c'est-à-dire sa position s, s'obtient en isolant sa dérivée $\dot{s}$ dans les termes de l'équation 1 et de l'équation 3. Pour cela l'équation 1 peut être écrite sous la forme :

$$\tau_{mv} = \tau_{mv\_causal} + B \times J_f \times \dot{s} \qquad \text{(équation 4)}$$

En substituant cette expression de $\tau_{mv}$ dans l'équation 3, il vient :

$$0 = J_f^T \times (\tau_{mv\_caus} + B \times J_f \times \dot{s}) + K_f \times (s - s_{ref}) + B_f \times (\dot{s} - \dot{s}_{ref})$$

Ce qui permet en isolant $\dot{s}$ d'obtenir l'équation différentielle qui régit l'évolution du mécanisme virtuel :

$$\dot{s} = (B_f + J_f^T \times B \times J_f)^{-1} \times (K_f \times (s_{ref} - s) + B_f \times \dot{s}_{ref} - J_f^T \times \tau_{mv\_caus}) \qquad \text{(équation 5)}$$

$(B_f + J_f^T \times B \times J_f)$ étant toujours inversible car B est définie positive, $B_f$ semi-définie positive et $J_f$ de rang plein.

L'équation 5 d'évolution du mécanisme virtuel est une équation différentielle ordinaire. Tous les termes du membre de droite peuvent s'exprimer en fonction des entrées du contrôleur 313 et de la position s. En intégrant l'équation 5 en temps réel, on détermine la position articulaire propre s du mécanisme virtuel 404 à chaque instant. L'intégration de l'équation 5 peut être mise en œuvre par n'importe quel intégrateur numérique comme par exemple la méthode d'Euler explicite.

En pratique, il est possible de choisir les valeurs des matrices diagonales K et B de telle sorte que le robot soit passif indépendamment du mécanisme virtuel 404. Ce réglage se fait par exemple de manière à maximiser la raideur de couplage K du mécanisme virtuel ce qui assure une précision maximale.

La loi de commande décrite ci-dessus permet de réaliser le guide virtuel dans l'espace articulaire du robot plutôt que dans l'espace cartésien. Ceci présente l'avantage, notamment dans le cas du robot selon le quatrième mode de réalisation de l'invention où la trajectoire souhaitée de chaque fil d'armure doit être répétée tout autour du flexible P, de permettre une description simplifiée des couplages / guidages souhaités. Le guidage dans l'espace articulaire permet en outre avantageusement de s'affranchir de problèmes rencontrés avec un guidage dans l'espace cartésien lorsque le robot franchit des configurations singulières ou qu'il présente des redondances selon certains degrés de liberté.

Bien entendu l'invention n'est pas limitée aux modes de réalisation décrits et on peut y apporter des variantes de réalisation sans sortir du cadre de l'invention tel que définie par les revendications.

Il est bien entendu que les robots illustrés ici ne sont donnés qu'à titre d'exemples et tout autre robot tel que défini ci-dessous entre dans le cadre de l'invention robot de co-manipulation comportant :

- une première chaîne d'éléments qui comporte un élément d'extrémité proximale formant une base du robot et un élément d'extrémité distale, les différents éléments étant montés mobiles les uns par rapport aux autres de sorte que l'élément d'extrémité distale soit déplaçable relativement à l'élément d'extrémité proximale,
- au moins un organe de pilotage du robot, ledit organe étant lié à l'un des éléments de la première chaîne d'éléments, autre que l'élément d'extrémité distale, et étant agencé pour pouvoir être déplacé directement par un opérateur relativement à l'élément d'extrémité proximale,
- des moyens de commande d'au moins une partie de la première chaîne d'éléments et de l'organe de pilotage,

la première chaîne d'éléments, l'organe de pilotage et les moyens de commande étant configurés de sorte qu'à au moins un mouvement de l'organe de pilotage relativement à l'élément d'extrémité proximale selon au moins un degré de liberté de l'organe de pilotage soit associé un mouvement plus complexe de l'élément d'extrémité distale relativement à l'élément d'extrémité proximale selon au moins l'un des degrés de liberté de l'élément d'extrémité distale.

En particulier, l'organe de pilotage pourra prendre n'importe quelle forme adaptée à une saisie et une manipulation ergonomique. Il pourra par exemple et de manière non limitative comporter une poignée, un stylo, un manche à balai par exemple de type joystick, une pince ou une boule. L'organe de pilotage pourra être conformé pour être saisi à une ou à deux mains. Il pourra également être creux afin que l'opérateur puisse y insérer un ou plusieurs doigts ou la paume de la main ou le bras.

Comme il a été indiqué, il sera possible de lier l'organe de pilotage à tout élément de la chaîne principale d'éléments autre que l'élément d'extrémité distale, soit directement (l'organe de pilotage est alors relié à un élément de la chaîne principale d'éléments de sorte à avoir les mêmes degrés de liberté que ledit élément) soit par l'intermédiaire d'une chaîne secondaire d'éléments. Par ailleurs, l'organe de pilotage pourra être relié à un élément de la chaîne principale d'éléments ou à un élément de la chaîne secondaire d'éléments soit en rendant l'organe de pilotage solidaire de l'élément considéré, soit par l'intermédiaire de moyens de mesure d'efforts comme un capteur d'efforts ou un organe de mesure d'efforts. Les seules limitations sont :

- que l'organe de pilotage soit mobile relativement à la base selon un nombre de degrés de liberté suffisant pour réaliser les mouvements élémentaires nécessaires à l'exécution de la tâche ;
- que l'organe de pilotage ne soit pas lié à l'élément d'extrémité distale afin que l'opérateur soit suffisamment éloigné de l'outil.

De préférence, le choix de l'élément duquel part la chaîne secondaire d'éléments ou auquel est lié l'organe de pilotage prendra en considération trois critères distincts :

- la simplicité mécanique du robot : on liera la chaîne secondaire d'éléments ou on liera l'organe de pilotage sur l'élément de la chaîne principale d'éléments le plus éloigné possible de la base de manière à partager le maximum de degrés de liberté possible entre l'organe de pilotage et l'outil. De façon préférée, on liera directement l'organe de pilotage (ou éventuellement par l'intermédiaire de moyens de mesure d'efforts) à l'élément de la chaîne principale d'éléments ayant le nombre de degrés de liberté requis pour la tâche à effectuer. Dans ce cas, il n'y a en effet pas besoin de chaîne secondaire d'éléments.
- l'ergonomie de manipulation de l'organe de pilotage : il convient en effet d'éviter que l'organe de pilotage doive être manipulé par des mouvements de grandes amplitudes.
- l'éloignement de l'opérateur de l'outil il convient aussi d'éviter que l'organe de pilotage soit trop proche de l'outil et donc de l'élément d'extrémité distale.

De la même façon, l'outil pourrait être de tout type adapté à la tâche à accomplir.

Il sera possible de lier l'outil à l'élément d'extrémité distale soit directement (l'outil est alors fixé et solidaire audit élément) soit par l'intermédiaire de moyens de mesure d'efforts comme un capteur d'efforts ou un organe de mesure d'efforts (l'outil est alors relié audit élément de sorte à avoir les mêmes degrés de liberté que ledit élément).

Bien qu'ici l'outil soit toujours en contact avec l'objet pour réaliser la tâche à accomplir, on pourra avoir un outil ne venant pas en permanence ou ne venant jamais en contact avec l'objet pour réaliser la tâche à accomplir et donc un outil n'appliquant pas d'efforts sur ledit objet, ou pas en permanence. Ainsi, l'outil pourra par exemple comporter un dispositif de contrôle permettant de vérifier que des soudures ont été correctement effectuées sur l'objet, l'objet étant par exemple la coque d'un bateau. L'outil est ainsi déplacé à distance constante de la surface de la coque suivant une orientation contrôlée par rapport à celle-ci mais ne vient jamais au contact de la coque. Dans ce cas, les couplages réguleront notamment la distance du dispositif de contrôle à la coque et l'orientation du dispositif de contrôle relativement à la coque tandis que les mouvements de l'organe de pilotage permettront de déplacer l'outil à la surface de la coque, ce qui simplifiera la tâche de l'opérateur.

L'outil pourra comporter un préhenseur, comme par exemple une pince motorisée à deux mors, qui pourra agir directement sur l'environnement ou porter un instrument comme une perceuse. L'outil pourra être un outil passif et non motorisé. Le robot pourra ne pas comporter d'outil mais seulement une pince, une main robotique ou tout autre préhenseur qui sera lié à l'élément d'extrémité distale soit directement (le préhenseur est alors fixé et solidaire audit élément) soit par l'intermédiaire de moyens de mesure d'efforts comme un capteur d'efforts ou un organe de mesure d'efforts (le préhenseur est alors relié audit élément de sorte à avoir les mêmes degrés de liberté que ledit élément). Le robot pourra ne comporter ni outil ni préhenseur et interagir directement avec son environnement avec l'élément d'extrémité distale du robot.

Par ailleurs, les couplages entre l'organe de pilotage et l'outil pourront être mis en oeuvre à l'aide de tout type de solutions adaptées qui ne sont pas limitées aux exemples décrits à condition que chaque mouvement de l'élément d'extrémité distale relativement à l'élément d'extrémité proximale soit :

- soit couplé de façon passive (par exemple à l'aide de câbles) ou de façon active (à l'aide des moyens de commande) à un mouvement de l'organe de pilotage relativement à l'élément d'extrémité distale et/ou à des efforts appliqués à l'organe de pilotage par l'opérateur,
- soit piloté de façon active (à l'aide des moyens de commande) ou de façon passive (par exemple à l'aide de ressorts ou par l'environnement du robot lui-même comme dans le quatrième mode de réalisation de l'invention) pour s'adapter à l'environnement du robot.

De la sorte, l'utilisation du robot demeure intuitive pour l'opérateur.

Comme il a été vu, tous les mouvements de l'outil et de l'organe de pilotage pourront être couplés de façon contrôlée, c'est-à-dire être couplés de façon active, grâce aux moyens de commande et notamment aux organes moteurs pilotés par le contrôleur. En variante, seule une partie des mouvements de l'outil et de l'organe de pilotage pourront être couplés de façon contrôlée. Le robot comportera alors par exemple des moyens de couplage mécanique passifs choisis pour que les mouvements de l'outil soient identiques à ceux de l'organe de pilotage dans les autres directions, les mouvements de l'outil étant éventuellement amplifiés par rapport à ceux de l'organe de pilotage, ou encore par exemple des moyens de couplage mécanique passifs pilotant automatiquement les mouvements de l'outil dans les autres directions tels que des ressorts.

On notera encore que sur les exemples illustrés aux figures 1 à 17, les mouvements de l'outil sont de plus grande amplitude que ceux de l'organe de pilotage mais les mouvements de l'outil pourraient également être de plus faible amplitude que ceux de l'organe de pilotage sans sortir du cadre de l'invention. Ce pourrait par exemple être le cas sur un robot de co-manipulation destiné à la chirurgie ou à intervenir dans le micro-monde ou dans le nano-monde. Ces déplacements pourraient encore être d'amplitudes similaires.

De la même façon, sur les exemples illustrés sur les figures 18 et 19, les efforts appliqués par l'outil sont de plus grande amplitude que ceux appliqués sur l'organe de pilotage mais les efforts exercés sur l'outil pourraient également être de plus faible amplitude que ceux exercés sur l'organe de pilotage sans sortir du cadre de l'invention. Ces efforts pourraient encore être d'amplitudes similaires.

Les organes moteurs peuvent comprendre des moteurs électriques à courant continu à rotor sans fer ou des moteurs sans balais, des moteurs à courant continu classiques, des alliages à mémoire de forme, des actionneurs piézoélectriques, des polymères actifs, des actionneurs pneumatiques ou hydrauliques. Les organes moteurs pourront encore comprendre sur un ou plusieurs éléments ou corps du robot des freins. Ces freins pourront ainsi être des freins à disques, des freins à poudre ou des freins à fluides magnéto ou électro rhéologiques. Les organes moteurs pourront également comprendre des actionneurs hybrides comprenant à la fois un moteur et un frein ou des dispositifs d'actionnement antagonistes et/ou des dispositifs à raideur variable de type 'series elastic actuators' ou 'parallel elastic actuators'. Lorsque les organes moteurs comprennent des réducteurs associés par exemple à des moteurs, les réducteurs pourront être de tout type et être par exemple des réducteurs à engrenages simples ou épicycloïdaux, à un ou plusieurs étages, des réducteurs de type "Harmonie Drive" (marque déposée) ou des réducteurs à vis à billes ou des cabestans à câbles.

En lieu et place de réducteurs réversibles, on pourra avoir des réducteurs non réversibles comme des réducteurs à roue et vis sans fin.

Les moyens de mesure des déplacements pourront comprendre des capteurs de tout type adapté comme des codeurs optiques, des capteurs à effet Hall, des potentiomètres ou des codeurs magnéto-optiques, les capteurs pouvant être absolus (multi-tours) ou relatifs. Ils pourront encore consister en des capteurs de vitesse ou d'accélération dont on déduit les déplacements par simple ou par double intégration. Les moyens de mesure de déplacements pourront être agencés sur les organes moteurs ou au niveau des différentes liaisons mécaniques entre les éléments et/ou les corps du robot. On pourra encore avoir sur un ou plusieurs axes des moyens de mesure à la fois sur les organes moteurs et sur les liaisons mécaniques.

Les moyens de mesure d'efforts pourront comprendre des capteurs multiaxes dont les déformations du corps d'épreuve seront mesurées par des jauges de contraintes, des dispositifs optiques ou électromagnétiques, des capteurs de pression, localisés ou matriciels, des capteurs de couple ou d'effort mono-axe agencés sur les organes moteurs et / ou les liaisons mécaniques du robot ou des moyens de mesure de courants moteurs des organes moteurs. Dans le cas de l'utilisation de moteurs et / ou de réducteurs à faible rendement et / ou présentant des frottements importants ou peu ou pas réversibles, les moyens de mesure pourront comprendre des capteurs d'efforts dont les signaux seront utilisés pour compenser ces défauts et rendre réversible le robot.

Les moyens de couplage mécanique passifs pourront également comprendre par exemple un mécanisme à centre de rotation déporté comme par exemple et de manière non exhaustive un double parallélogramme.

Le robot pourra comporter des boutons de commande agencés ailleurs qu'au niveau de l'organe de pilotage. Les boutons de commande pourront ainsi être agencés sur la base du robot, sur un boîtier séparé de la chaîne secondaire ou principale d'éléments ou à tout autre endroit adapté. On pourra également utiliser tout autre moyen d'interaction avec le robot en complément ou en remplacement des boutons de commande, comme par exemple et de manière non limitative un clavier, une souris, un ou des écrans tactiles ou un dispositif de commande vocale. Le robot pourra aussi être équipé d'un dispositif de type « homme mort ».

Le robot pourra ne pas comporter de système de mesure externe ou un système de mesure autre que celui illustré à la figure 1 comme par exemple : un système de capture de mouvement (plus connu sous le terme anglais de « motion capture ») avec ou sans cibles comme le dispositif ART Track (marque déposée), des capteurs électromagnétiques ou ultrasoniques comme les capteurs Polhemus, des trackeurs laser du type Leica (marque déposée) « Eye Tracker », c'est-à-dire se basant sur des mouvements occulaires d'un opérateur, des caméras temps de vol, à cartographie de profondeur (plus connu sous le terme anglais de « deepthmap caméra ») ou à large champ de vision comme les systèmes Kinect (marque déposée) ou le dispositif Leap Motion (marque déposée). Le système de mesure externe pourra encore comprendre une caméra fonctionnant dans n'importe quelle bande du spectre lumineux, en particulier dans le domaine de la lumière visible ou dans l'infrarouge, les images du système étant alors traitées pour en extraire des informations de position et d'orientation de l'outil et d'état de l'environnement du robot. Le système de mesure externe pourra en outre comprendre un dispositif d'éclairage associé à la caméra venant renforcer le contraste des images. Le système de mesure externe pourra comprendre une pluralité de caméras agencées autour du robot, pour avoir une mesure 3D, une meilleure résolution ou encore pour éviter les angles morts et les occlusions visuelles. Le système de mesure externe pourrait en outre comprendre des moyens d'éclairage pour illuminer le robot et son environnement à l'aide d'une lumière structurée pour faciliter les mesures.

Les moyens de mesure pourront encore être associés à un modèle virtuel de l'environnement et/ou du robot et /ou de l'opérateur, modèle venant servir de support pour générer le couplage outil/organe de pilotage.

Les différentes liaisons cinématiques ont bien entendu été illustrées de façon simplifiée. Elles pourraient ainsi être réalisées à l'aide de roulements à billes, de pallier lisses, de paliers magnétiques ou de toute autre solution connue de l'art antérieur. Il pourrait également être avantageux de réaliser des liaisons en chape c'est-à-dire avec une reprise des efforts de chaque côté de la liaison cinématique considérée.

De même les différents éléments et corps du robot ont été illustrés de façon simplifiée. Ainsi, ces différents éléments et corps pourront ne pas être monoblocs mais être constitués de plusieurs blocs solidarisés entre eux.

Le contrôleur ainsi que les lois de commande qui y sont implantées pourront être différents de ce qui a été décrit. Par exemple, bien qu'ici le guide virtuel soit réalisé dans un espace articulaire, le guide virtuel pourra être réalisé dans un espace cartésien.

## Revendications

1. Robot de co-manipulation comportant :

    - une première chaîne d'éléments qui comporte un élément d'extrémité proximale (6 ; 106 ; 206 ; 306) formant une base du robot et un élément d'extrémité distale, les différents éléments étant montés mobiles les uns par rapport aux autres de sorte que l'élément d'extrémité distale soit déplaçable relativement à l'élément d'extrémité proximale,
- au moins un organe de pilotage du robot (9 ; 109 ; 209 ; 309), ledit organe étant lié à l'un des éléments de la première chaîne d'éléments, autre que l'élément d'extrémité distale, et étant agencé pour pouvoir être déplacé directement par un opérateur relativement à l'élément d'extrémité proximale,
- des moyens de commande (13, 14, 15, 16 ; 113, 116, 150, 150a, 151a, 151b, 151, 152, 153, 154, 155; 213, 215 ; 313, 350, 315) d'au moins une partie de la première chaîne d'éléments et de l'organe de pilotage, **caractérisé en ce que** la première chaîne d'éléments, l'organe de pilotage et les moyens de commande sont configurés de sorte qu'à au moins un mouvement de l'organe de pilotage relativement à l'élément d'extrémité proximale selon au moins un degré de liberté de l'organe de pilotage soit associé un mouvement plus complexe de l'élément d'extrémité distale relativement à l'élément d'extrémité proximale selon au moins l'un des degrés de liberté de l'élément d'extrémité distale .

2. Robot selon la revendication 1, dans lequel la première chaîne d'éléments, l'organe de pilotage et les moyens de commande sont configurés pour imposer au moins un mouvement de l'organe de pilotage relativement à l'élément d'extrémité proximale et/ou pour imposer des efforts à l'organe de pilotage.

3. Robot selon la revendication 1 ou la revendication 2, dans lequel la première chaîne d'éléments, l'organe de pilotage et les moyens de commande sont configurés de sorte que des efforts appliqués à l'élément d'extrémité distale soient couplés à un mouvement de l'organe de pilotage relativement à l'élément d'extrémité proximale et/ou à des efforts appliqués à l'organe de pilotage par l'opérateur.

4. Robot selon l'une des revendications précédentes, dans lequel la première chaîne d'éléments, l'organe de pilotage et les moyens de commande sont en outre configurés de sorte que chaque mouvement de l'élément d'extrémité distale relativement à l'élément d'extrémité proximale soit couplé à un mouvement de l'organe de pilotage relativement à l'élément d'extrémité proximale et/ou à des efforts appliqués à l'organe de pilotage par l'opérateur, au moins un des mouvements de l'élément d'extrémité distale relativement à l'élément d'extrémité proximale étant nécessairement couplé à un mouvement de l'organe de pilotage relativement à l'élément d'extrémité proximale.

5. Robot selon l'une des revendications 1 à 4, dans lequel les moyens de commande comportent des organes moteurs (150, 153) agencés sur la première chaîne d'éléments de sorte que tous les mouvements relatifs entre les différents éléments de ladite chaîne d'éléments soient motorisés.

6. Robot selon l'une des revendications 1 à 4, dans lequel les moyens de commande comportent des organes moteurs (350) et dans lequel le robot comporte des moyens de couplage mécanique passifs (385), les organes moteurs et les moyens de couplage mécanique passifs étant agencés sur la première chaîne d'éléments de sorte qu'une partie des mouvements relatifs entre les différents éléments de ladite chaîne d'éléments soient motorisés et les autres soient pilotés de façon passive.

7. Robot selon l'une des revendications 1 à 6, comportant en outre une deuxième chaîne d'éléments qui comporte au moins un premier corps lié à l'un des éléments de la première chaîne d'éléments, l'organe de pilotage (9 ; 109 ; 209 ; 309) étant alors lié audit élément par l'intermédiaire de la deuxième chaîne d'éléments.

8. Robot selon la revendication 7, dans lequel les moyens de commande comportent des organes moteurs agencés sur la deuxième chaîne d'éléments de sorte que tous les mouvements relatifs entre les différents corps de ladite deuxième chaîne d'éléments et entre le premier corps et l'élément de la première chaîne d'éléments auquel le premier corps est lié soient motorisés.

9. Robot selon l'une des revendications 1 à 8, comportant en outre un outil (8, 46, 108, 208) et/ou un préhenseur (45, 308) lié à l'élément d'extrémité distale de sorte à avoir les mêmes degrés de liberté que ledit élément d'extrémité distale.

10. Robot selon l'une des revendications 1 à 9, configuré de sorte que le nombre de degrés de liberté de l'organe de pilotage (9 ; 109 ; 209 ; 309) relativement à l'élément d'extrémité proximale soit strictement inférieur au nombre de degrés de liberté de l'élément d'extrémité distale relativement à l'élément d'extrémité proximale.

11. Robot selon l'une des revendications 1 à 10, dans lequel au moins la première chaîne d'éléments et l'organe de pilotage sont configurés de sorte que les mouvements de l'organe de pilotage (9 ; 109 ; 209 ; 309) relativement à l'élément d'extrémité proximale soient identiques aux mouvements de l'élément d'extrémité distale relativement à l'élément d'extrémité proximale dans certaines directions, lesdits mouvements n'étant pas contrôlés par les moyens de commande.

**12.** Robot selon l'une des revendications 1 à 11, dans lequel les moyens de commande sont configurés de sorte à commander au moins un des mouvements de l'élément d'extrémité distale relativement à l'élément d'extrémité proximale en fonction d'efforts appliqués à l'organe de pilotage (9 ; 109 ; 209 ; 309) par l'opérateur.

**13.** Robot selon l'une des revendications 1 à 12, dans lequel les moyens de commande comportent des moyens de mesure des efforts (14) exercés sur l'élément d'extrémité distale, l'outil ou le préhenseur.

**14.** Robot selon l'une des revendications 1 à 13, dans lequel les moyens de commande comportent des moyens de mesure des efforts (15 ; 215 ; 315) exercés sur l'organe de pilotage par l'opérateur.

**15.** Robot selon la revendication 13 ou la revendication 14, dans lequel les moyens de mesure comportent un capteur d'efforts multiaxe (14, 15, 215).

**16.** Robot selon l'une des revendications 1 à 15, dans lequel les moyens de commande comportent un contrôleur (13 ; 113 ; 213 ; 313) permettant de programmer des couplages entre l'organe de pilotage (9 ; 109 ; 209 ; 309) et l'élément d'extrémité distale, le robot comportant des moyens d'activation (117) d'au moins l'un des couplages implémentés dans le contrôleur.

**17.** Robot selon la revendication 16, dans lequel les moyens d'activation comportent au moins un bouton de commande (117) agencé sur l'organe de pilotage (9 ; 109 ; 209 ; 309).

**18.** Robot selon l'une des revendications 1 à 17, dans lequel les moyens de commande comportent un contrôleur (13, 113, 213, 313) permettant de programmer des couplages entre l'organe de pilotage (9 ; 109 ; 209 ; 309) et l'élément d'extrémité distale, le contrôleur comprenant un correcteur d'augmentation des efforts (402) qui permet d'amplifier au niveau de l'extrémité distale, de l'outil ou du préhenseur, des efforts appliqués par l'opérateur sur l'organe de pilotage, et ce au moins pour certains degrés de liberté de l'extrémité distale, de l'outil ou du préhenseur.

**19.** Robot selon l'une des revendications 1 à 18, dans lequel les moyens de commande comportent un contrôleur (13, 113, 213, 313) permettant de programmer des couplages entre l'organe de pilotage (9 ; 109 ; 209 ; 309) et l'élément d'extrémité distale, le contrôleur comprenant un mécanisme virtuel (404) qui permet de guider au moins selon certains degrés de liberté de l'organe de pilotage les mouvements de l'organe de pilotage.

**20.** Robot selon l'une des revendications 1 à 19, dans lequel les moyens de commande comportent un système de mesure externe (16 ; 116).

**21.** Robot selon l'une des revendications 1 à 20, dans lequel l'organe de pilotage (9 ; 109 ; 209 ; 309) est directement lié à l'un des éléments de la première chaîne d'éléments de sorte à être solidaire dudit élément.

**22.** Robot selon l'une des revendications 1 à 21, dans lequel l'organe de pilotage (9 ; 109 ; 209 ; 309) est lié à l'un des éléments de la première chaîne d'éléments par l'intermédiaire de moyens de mesure d'efforts de sorte que l'organe de pilotage ait uniquement les mêmes degrés de liberté que ledit élément.

**Patentansprüche**

**1.** Roboter zur Co-Handhabung, umfassend:

- eine erste Elementkette, die ein proximales Endelement (6; 106; 206; 306), das eine Basis des Roboters bildet, und ein distales Endelement umfasst, wobei die verschiedenen Elemente derart beweglich zueinander gelagert sind, dass das distale Endelement relativ zu dem proximalen Endelement verschiebbar ist,
- mindestens ein Steuerorgan zum Steuern des Roboters (9; 109; 209; 309), wobei das genannte Organ mit einem anderen der Elemente der ersten Elementkette als dem distalen Endelement verbunden und ausgebildet ist, relativ zum proximalen Endelement direkt durch eine Bedienperson verschoben werden zu können,
- Steuerungsmittel (13, 14, 15, 16; 113, 116, 150, 150a, 151a, 151b, 151, 152, 153, 154, 155; 213, 215; 313, 350, 315) zur Steuerung zumindest eines Teils der ersten Elementkette und des Steuerorgans, **dadurch gekennzeichnet, dass**

die erste Elementkette, das Steuerorgan und die Steuerungsmittel derart ausgebildet sind, dass mit mindestens einer Bewegung des Steuerorgans relativ zum proximalen Endelement gemäß mindestens einem Freiheitsgrad des Steuerorgans eine komplexere Bewegung des distalen Endelements relativ zum proximalen Endelement gemäß mindestens einem der Freiheitsgrade des distalen Endelements verbunden ist.

2. Roboter nach Anspruch 1, bei dem die erste Elementkette, das Steuerorgan und die Steuerungsmittel ausgebildet sind, mindestens eine Bewegung des Steuerorgans relativ zum proximalen Endelement zu erzwingen und/oder dem Steuerorgan Kräfte aufzuerlegen.

3. Roboter nach Anspruch 1 oder Anspruch 2, bei dem die erste Elementkette, das Steuerorgan und die Steuerungsmittel derart ausgebildet sind, dass Kräfte, die auf das distale Endelement aufgebracht werden, mit einer Bewegung des Steuerorgans relativ zum proximalen Endelement und/oder mit Kräften, die von der Bedienperson auf das Steuerorgan aufgebracht werden, gekoppelt sind.

4. Roboter nach einem der vorhergehenden Ansprüche, bei dem die erste Elementkette, das Steuerorgan und die Steuerungsmittel ferner derart ausgebildet sind, dass jede Bewegung des distalen Endelements relativ zum proximalen Endelement mit einer Bewegung des Steuerorgans relativ zum proximalen Endelement und/oder Kräften, die von der Bedienperson auf das Steuerorgan aufgebracht werden, gekoppelt ist, wobei zumindest eine der Bewegungen des distalen Endelements relativ zum proximalen Endelement zwangsläufig mit einer Bewegung des Steuerorgans relativ zum proximalen Endelement gekoppelt ist.

5. Roboter nach einem der Ansprüche 1 bis 4, bei dem die Steuerungsmittel Antriebsorgane (150, 153) umfassen, die an der ersten Elementkette derart ausgebildet sind, dass alle Relativbewegungen zwischen den verschiedenen Elementen der genannten Elementkette motorisiert sind.

6. Roboter nach einem der Ansprüche 1 bis 4, bei dem die Steuerungsmittel Antriebsorgane (350) umfassen und bei dem der Roboter passive mechanische Kopplungsmittel (385) umfasst, wobei die Antriebsorgane und die passiven mechanischen Kopplungsmittel an der ersten Elementkette derart ausgebildet sind, dass ein Teil der Relativbewegungen zwischen den verschiedenen Elementen der genannten Elementkette motorisiert und die anderen passiv gesteuert sind.

7. Roboter nach einem der Ansprüche 1 bis 6, ferner umfassend eine zweite Elementkette, die mindestens einen ersten Körper umfasst, der mit einem der Elemente der ersten Elementkette verbunden ist, wobei das Steuerorgan (9; 109; 209; 309) dann mit dem genannten Element über die zweite Elementkette verbunden ist.

8. Roboter nach Anspruch 7, bei dem die Steuerungsmittel Antriebsorgane umfassen, die an der zweiten Elementkette derart ausgebildet sind, dass alle Relativbewegungen zwischen den verschiedenen Körpern der genannten zweiten Elementkette und zwischen dem ersten Körper und dem Element der ersten Elementkette, mit dem der erste Körper verbunden ist, motorisiert sind.

9. Roboter nach einem der Ansprüche 1 bis 8, ferner umfassend ein Werkzeug (8, 46, 108, 208) und/oder einen Greifer (45, 308), das bzw. der mit dem distalen Endelement derart verbunden ist, dass es bzw. er die gleichen Freiheitsgrade wie das distale Endelement hat.

10. Roboter nach einem der Ansprüche 1 bis 9, der derart ausgebildet ist, dass die Anzahl der Freiheitsgrade des Steuerorgans (9; 109; 209; 309) relativ zum proximalen Endelement strikt kleiner als die Anzahl der Freiheitsgrade des distalen Endelements relativ zum proximalen Endelement ist.

11. Roboter nach einem der Ansprüche 1 bis 10, bei dem zumindest die erste Elementkette und das Steuerorgan derart ausgebildet sind, dass die Bewegungen des Steuerorgans (9; 109; 209, 309) relativ zum proximalen Endelement identisch zu den Bewegungen des distalen Endelements relativ zum proximalen Endelement in bestimmten Richtungen sind, wobei die genannten Bewegungen nicht von den Steuerungsmitteln gesteuert werden.

12. Roboter nach einem der Ansprüche 1 bis 11, bei dem die Steuerungsmittel so ausgebildet sind, dass sie zumindest eine der Bewegungen des distalen Endelements relativ zum proximalen Endelement in Abhängigkeit von Kräften steuern, die von der Bedienperson auf das Steuerorgan (9; 109; 209; 309) aufgebracht werden.

13. Roboter nach einem der Ansprüche 1 bis 12, bei dem die Steuerungsmittel Mittel (14) zum Messen von Kräften umfassen, die auf das distale Endelement, das Werkzeug oder den Greifer ausgeübt werden.

14. Roboter nach einem der Ansprüche 1 bis 13, bei dem die Steuerungsmittel Mittel (15; 215; 315) zum Messen von Kräften umfassen, die von der Bedienperson auf das Steuerorgan ausgeübt werden.

15. Roboter nach Anspruch 13 oder Anspruch 14, bei dem die Messmittel einen Mehrachsen-Kraftsensor (14, 15, 215) umfassen.

16. Roboter nach einem der Ansprüche 1 bis 15, bei dem die Steuerungsmittel ein Kontrollgerät (13; 113; 213; 313) umfassen, das ein Programmieren von Kopplungen zwischen dem Steuerorgan (9; 109; 209; 309) und dem distalen Endelement ermöglicht, wobei der Roboter Aktivierungsmittel (117) zum Aktivieren mindestens einer der Kopplungen umfasst, die in dem Kontrollgerät implementiert sind.

17. Roboter nach Anspruch 16, bei dem die Aktivierungsmittel mindestens eine Steuertaste (117) umfassen, die auf dem Steuerorgan (9; 109; 209; 309) angeordnet ist.

18. Roboter nach einem der Ansprüche 1 bis 17, bei dem die Steuerungsmittel ein Kontrollgerät (13, 113, 213, 313) umfassen, das ein Programmieren von Kopplungen zwischen dem Steuerorgan (9; 109; 209; 309) und dem distalen Endelement ermöglicht, wobei das Kontrollgerät einen Krafterhöhungskorrektor (402) umfasst, der ein Verstärken im Bereich des distalen Endes, des Werkzeugs oder des Greifers von Kräften ermöglicht, die von der Bedienperson auf das Steuerorgan aufgebracht werden, und dies zumindest für bestimmte Freiheitsgrade des distalen Endes, des Werkzeugs oder des Greifers.

19. Roboter nach einem der Ansprüche 1 bis 18, bei dem die Steuerungsmittel ein Kontrollgerät (13, 113, 213, 313) umfassen, das ein Programmieren von Kopplungen zwischen dem Steuerorgan (9; 109; 209; 309) und dem distalen Endelement ermöglicht, wobei das Kontrollgerät einen virtuellen Mechanismus (404) umfasst, der ein Führen der Bewegungen des Steuerorgans zumindest nach bestimmten Freiheitsgraden des Steuerorgans ermöglicht.

20. Roboter nach einem der Ansprüche 1 bis 19, bei dem die Steuerungsmittel ein externes Messsystem (16; 116) umfassen.

21. Roboter nach einem der Ansprüche 1 bis 20, bei dem das Steuerorgan (9; 109; 209; 309) direkt mit einem der Elemente der ersten Elementkette verbunden ist, sodass es fest mit dem genannten Element verbunden ist.

22. Roboter nach einem der Ansprüche 1 bis 21, bei dem das Steuerorgan (9; 109; 209; 309) mit einem der Elemente der ersten Elementkette über Kraftmessmittel derart verbunden ist, dass das Steuerorgan nur die gleichen Freiheitsgrade wie das genannte Element hat.

**Claims**

1. A co-manipulation robot, comprising:

   - a first chain of elements which comprises a proximal end element (6; 106; 206; 306) forming a base of the robot and a distal end element, the various elements being mounted with the ability to move relative to one another so that the distal end element can be moved relative to the proximal end element,
   - at least one robot operating member (9; 109; 209; 309), said member being connected to one of the elements of the first chain of elements, other than the distal end element, and being designed to be able to be moved directly by an operator relative to the proximal end element,
   - control means (13, 14, 15, 16; 113, 116, 150, 150a, 151a, 151b, 151, 152, 153, 154, 155; 213, 215; 313, 350, 315) for controlling at least part of the first chain of elements and the operating member,

   being **characterized in that** the first chain of elements, the operating member and the control means are configured so that at least one movement of the operating member relative to the proximal end element according to at least one degree of freedom of the operating member has, associated with it, a more complex movement of the distal end element relative to the proximal end element according to at least one of the degrees of freedom of the distal end element.

2. The robot as claimed in claim 1, in which the first chain of elements, the operating member and the control means are configured to impose at least one movement of the operating member relative to the proximal end element and/or to impose forces on the operating member.

3. The robot as claimed in claim 1 or claim 2, in which the first chain of elements, the operating member and the control means are configured so that forces applied to the distal end element are coupled to a movement of the operating member relative to the proximal end element and/or to forces applied to the operating member by the operator.

4. The robot as claimed in one of the preceding claims, in which the first chain of elements, the operating member and the control means are furthermore configured so that each movement of the distal end element relative to the proximal end element is coupled to a movement of the operating member relative to the proximal end element and/or to forces applied to the operating member by the operator, at least one of the movements of the distal end element relative to the proximal end element being necessarily coupled to a movement of the operating member relative to the proximal end element.

5. The robot as claimed in one of claims 1 to 4, in which the control means comprise drive members (150, 153) arranged on the first chain of elements so that all the relative movements of the various elements of said chain of elements relative to one another are motorized.

6. The robot as claimed in one of claims 1 to 4, in which the control means comprise drive members (350) and in which the robot comprises passive means of mechanical coupling (385), the drive members and the passive means of mechanical coupling being arranged on the first chain of elements so that some of the relative movements between the various elements of said chain of elements are motorized and the others are operated passively.

7. The robot as claimed in one of claims 1 to 6, further comprising a second chain of elements which comprises at least one first body connected to one of the elements of the first chain of elements, the operating member (9; 109; 209; 309) then being connected to said element via the second chain of elements.

8. The robot as claimed in claim 7, in which the control means comprise drive members arranged on the second chain of elements so that all the relative movements of the various bodies of said second chain of elements relative to one another and between the first body and the element of the first chain of elements to which the first body is connected are motorized.

9. The robot as claimed in one of claims 1 to 8, further comprising a tool (8, 46, 108, 208) and/or a gripper (45, 308) connected to the distal end element so as to have the same degrees of freedom as said distal end element.

10. The robot as claimed in one of claims 1 to 9, configured so that the number of degrees of freedom of the operating member (9; 109; 209; 309) relative to the proximal end element is strictly less than the number of degrees of freedom of the distal end element relative to the proximal end element.

11. The robot as claimed in one of claims 1 to 10, in which at least the first chain of elements and the operating member are configured so that the movements of the operating member (9; 109; 209; 309) relative to the proximal end element are identical to the movements of the distal end element relative to the proximal end element in certain directions, said movements not being controlled by the control means.

12. The robot as claimed in one of claims 1 to 11, in which the control means are configured so as to control at least one of the movements of the distal end element relative to the proximal end element as a function of forces applied to the operating member (9; 109; 209; 309) by the operator.

13. The robot as claimed in one of claims 1 to 12, in which the control means comprise load-measuring means (14) measuring the forces exerted on the distal end element, the tool or the gripper.

14. The robot as claimed in one of claims 1 to 13, in which the control means comprise load measuring means (15; 215; 315) for measuring the forces exerted on the operating member by the operator.

**15.** The robot as claimed in claim 13 or claim 14, in which the measuring means comprise a multiaxis load cell (14, 15, 215) .

**16.** The robot as claimed in one of claims 1 to 15, in which the control means comprise a controller (13; 113; 213; 313) that makes it possible to program couplings between the control member (9; 109; 209; 309) and the distal end element, the robot comprising activating means (117) for activating at least one of the couplings implemented in the controller.

**17.** The robot as claimed in claim 16, in which the activating means comprise at least one control button (117) arranged on the operating member (9; 109; 209; 309).

**18.** The robot as claimed in one of claims 1 to 17, in which the control means comprise a controller (13, 113, 213, 313) making it possible to program couplings between the operating member (9; 109; 209; 309) and the distal end element, the controller comprising a force augmentation corrector (402) that makes it possible to amplify, at the distal end, at the tool, or at the gripper, forces applied by the operator to the operating member, and to do so for at least certain degrees of freedom of the distal end, of the tool or of the gripper.

**19.** The robot as claimed in one of claims 1 to 18, in which the control means comprise a controller (13, 113, 213, 313) making it possible to program couplings between the operating member (9; 109; 209; 309) and the distal end element, the controller comprising a virtual mechanism (404) that makes it possible to guide the movements of the operating member at least according to certain degrees of freedom of the operating member.

**20.** The robot as claimed in one of claims 1 to 19, in which the control means comprise an external measurement system (16; 116).

**21.** The robot as claimed in one of claims 1 to 20, in which the operating member (9; 109; 209; 309) is directly connected to one of the elements of the first chain of elements so as to be secured to said element.

**22.** The robot as claimed in one of claims 1 to 21, in which the operating member (9; 109; 209; 309) is connected to one of the elements of the first chain of elements via load measuring means so that the operating member has only the same degrees of freedom as said element.

Fig. 1

Fig. 2

Fig. 3

Fig. 4

Fig. 5

Fig. 6

Fig. 7

Fig. 8

Fig. 9

Fig. 10

Fig. 11

Fig. 12

313

C

384

383

H7,H8

372

382

B

G

P

303

315

381    302

350

H6

A

301

H1,H2

309    306    350

Fig. 13

## Zoom A

315j

315d    315b

315f

315i

315c

H1,H2

381

315g

309

315e  315h  315a

Fig. 14

## Zoom B

Fig. 15

Fig. 17

Fig. 16

Fig. 18

Fig. 19

**EP 3 157 714 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2012237319 A